Europäisches Patentamt

European Patent Office

Office européen des brevets

(19)

(11)  **EP 0 769 523 B1**

(12)  **EUROPEAN PATENT SPECIFICATION**

(45) Date of publication and mention
of the grant of the patent:
**15.01.2003  Bulletin 2003/03**

(51) Int Cl.[7]: **C08L 23/04**, C08F 4/602

(21) Application number: **96307546.0**

(22) Date of filing: **17.10.1996**

(54) **Polyethylene resin inner container for bag in box, a package using said inner container, and method for transporting fluent material**

Innenbeutel aus Polyethylenharz für 'Bag in box'-Verpackungen, eine Verpackung die diesen Innenbeutel verwendet und ein Verfahren zum Transport flüssiger Materialien

Récipient interne en résine de polyéthylène pour un emballage du type 'bag in box', emballage utilisant celui-ci et procédé pour transporter un matériel liquide

(84) Designated Contracting States:
**DE FR GB IT NL**

(30) Priority: **18.10.1995  JP  27010795**

(43) Date of publication of application:
**23.04.1997  Bulletin 1997/17**

(73) Proprietor: **MITSUI CHEMICALS, INC.
Tokyo (JP)**

(72) Inventor: **Tanaka, Mutsuhiro
Ichigara-shi, Chiba 299-01 (JP)**

(74) Representative: **Cresswell, Thomas Anthony
J.A. KEMP & CO.
14 South Square
Gray's Inn
London WC1R 5JJ (GB)**

(56) References cited:
**EP-A- 0 575 123          EP-A- 0 735 090
WO-A-95/10566**

• **PATENT ABSTRACTS OF JAPAN vol. 016, no. 515 (M-1329), 23 October 1992 & JP 04 189769 A (FUJIMORI KOGYO KK), 8 July 1992,**
• **DATABASE WPI Section Ch, Week 9549 Derwent Publications Ltd., London, GB; Class A17, AN 95-379729 XP002054129 & JP 07 257 540 A (AICELLO CHEM CO LTD) , 9 October 1995**
• **DATABASE WPI Section Ch, Week 9747 Derwent Publications Ltd., London, GB; Class A18, AN 97-508413 XP002054130 & JP 09 240 731 A (JAPAN POLYOLEFINS CO LTD) , 16 September 1997**

**Description**

FIELD OF THE INVENTION

The present invention relates to soft, thin-wall polyethylene resin inner containers for bag in box, encased in outer containers. More particularly, the invention relates to polyethylene resin inner containers for bag in box, which are prevented from occurrence of pinholes or break caused by folding and are free from separation at their thermally adhered parts.

BACKGROUND OF THE INVENTION

Containers made up of outer boxes such as corrugated boxes and synthetic resin inner bags encased therein are referred to as "bag in box". Because of their excellent flexibility and economical effects, these containers have been conventionally used as containers for various liquids such as liquors, vinegar, a developing solution for photography, a bleaching solution and a germicide solution.

The soft, thin-wall synthetic resin inner containers used for the bag in box are manufactured in the following manner. A synthetic resin is melt extruded; immediately thereafter, two halves of a container are formed through compression molding, vacuum molding or blow molding by the use of such a mold as is able to join halves of the resulting container with their diagonals; and thereafter or simultaneously therewith, those halves are joined together.

In consideration of transport efficiency and handling properties, the inner containers for bag in box manufactured as above are generally in the folded state before they are used, that is, each container is folded so that one half of the container lies on the other half.

The synthetic resins used for preparing these inner containers are required to not only have high melt tension and good moldability but also provide films having such high folding endurance that occurrence of pinholes or break caused by crease can be prevented.

In order to satisfy these requirements, particularly to keep foldaibility, an ethylene/vinyl acetate copolymer (EVA) and a polyethylene resin composition wherein EVA or high-pressure low-density polyethylene is compounded with linear polyethylene are conventionally used as resins for the inner containers for bag in box.

In the use of EVA only, however, obtainable are only inner containers having poor anti-pinhole properties and flex resistance, though their foldability is good. In the use of only the conventional linear polyethylene, the resulting inner containers show poor moldability, though they have good anti-pinhole properties. As for the polyethylene resin composition wherein EVA or high-pressure low-density polyethylene is compounded with the linear polyethylene, a large amount of EVA or the high-pressure low-density polyethylene must be added to the linear polyethylene to improve moldability, and as a result the anti-pinhole properties and the flex resistance become poor.

The low-density polyethylene prepared by a high-pressure radical polymerization process has higher melt tension than ethylene copolymers prepared by the use of Ziegler catalyst, and therefore this polyethylene is used for films or hollow containers. However, the high-pressure low-density polyethylene is poor not only in mechanical strength such as tensile strength, tear strength or impact strength but also in heat resistance and stress crack resistance.

Japanese Patent Laid-Open Publications No. 90810/1981 or No. 106806/1985 proposes a method to improve melt tension or swell ratio (die/swell ratio) of ethylene copolymers obtained by the use of Ziegler catalyst, particularly titanium catalyst, thereby to improve moldability.

In the ethylene copolymers (particularly low-density ethylene copolymers) obtained by the use of the titanium catalyst, however, there resides problems of wide composition distribution and tackiness of molded products such as films.

Of the ethylene copolymers prepared by the use of Ziegler catalyst, ethylene copolymers obtained by the use of chromium catalyst have relatively high melt tension but show poor heat stability. The reason is presumably that chain terminals of the ethylene copolymers obtained by the use of chromium catalyst easily become unsaturated bonds.

It is known that ethylene copolymers obtained by the use of a metallocene catalyst, that is a kind of Ziegler catalyst, have narrow composition distribution and the molded products thereof are almost free from tackiness, that is, the molded products hardly suffer from blocking. Japanese Patent Laid-Open Publication No. 35007/1985 describes that ethylene copolymers obtained by the use of a zirconocene compound catalyst comprising a cyclopentadienyl derivative contain one terminal unsaturated bond per one molecule, and it is presumed that these ethylene copolymers have poor heat stability similarly to the above-mentioned ethylene copolymers prepared by the use of the chromium catalyst. Further, there is a fear that these ethylene copolymers show poor flowability in the extrusion molding process because of their narrow molecular weight distribution.

Accordingly, development of an ethylene copolymer having high melt tension, small stress in the high shear region, good heat stability, high mechanical strength and narrow composition distribution will industrially be of great value.

Japanese Patent Laid-Open Publication No. 189769/1992 proposes a synthetic resin inner container for bag in box, which is formed from a resin blend of a linear polyethylene and a low density polyethylene in a weight ratio of 55/45 to 65/35. According to this publication, the resulting inner container is free from separation because the resin is firmly bonded at the thermally adhered portion, and besides the container has folding endurance. Though the synthetic resin inner container for bag in box proposed in the publication shows good moldability, it has a problem in that pinholes or cracks are easily brought about when severely folded, because 35 % by weight of the low-density polyethylene is blended with the linear polyethylene.

Under the circumstances, the present inventors have earnestly studied and found that an ethylene copolymer, which is a copolymer of ethylene and an $\alpha$-olefin of 3 to 20 carbon atoms and has a specific density, a specific melt flow rate (MFR) and a specific relation between the temperature (melting point, Tm) at the maximum peak position of its endotherm curve measured by a differential scanning calorimeter (DSC) and the density (d), has excellent heat stability and narrow composition distribution. The present inventors have also found that a polyethylene resin comprising the ethylene copolymer has good moldability and this resin can be molded into an inner container for bag in box which is remarkably prevented from occurrence of pinholes or break caused by folding. Based on the finding, the present invention has been accomplished.

OBJECT OF THE INVENTION

The present invention is intended to solve such problems associated with the prior art as mentioned above, and it is an object of the invention to provide a polyethylene resin inner container for bag in box which is formed from a polyethylene resin of good moldability and which has excellent blocking resistance, anti-pinhole properties and flex resistance.

SUMMARY OF THE INVENTION

The polyethylene resin inner container for bag in box according to the invention is formed from a polyethylene resin comprising an ethylene copolymer [A] having the following properties:

(i) the copolymer [A] is a copolymer of ethylene and an $\alpha$-olefin of 3 to 20 carbon atoms;
(ii) the density is in the range of 0.880 to 0.960 g/cm$^3$;
(iii) the melt flow rate (MFR, ASTM D 1238-65T, 190 °C, load of 2.16 kg) is in the range of 0.01 to 20 g/10 min; and
(iv) the temperature (Tm (°C)) at the maximum peak position of the endothermic curve measured by a differential scanning calorimeter (DSC) and the density (d (g/cm$^3$)) satisfy the following relation:

$$Tm < 400 \times d - 250.$$

(v) copolymer [A] has not more than 0.5 unsaturated bonds per 1,000 carbon atoms, and less than 1 per one molecule of the copolymer;
(vi) the quantity fraction (W (% by weight)) of the n-decane-soluble component of copolymer [A] at room temperature and the density (d, (g/cm$^3$)) satisfy the following relation:
      in the case of MFR $\leq$ 10 g/min:

$$W < 80 \times \exp(-100(d-0.88)) + 0.1;$$

      in the case of MFR > 10 g/min:

$$W < 80 \times (MFR-9)^{0.35} \times \exp(-100(d-0.88)) + 0.1;$$

(vii) the flow index (FI (1/sec)) of copolymer [A] defined as a shear rate given when the stress of the molten polymer at 190°C reaches 2.4 x 10$^6$ dyne/cm$^2$ and the melt flow rate (MFR (10 min)) satisfy the following relation:

$$FI > 75 \times MFR;$$

(viii) the melt tension (MT (g)) at 190°C and the melt flow rate (MFR (g/10 min)) satisfy the following relation:

$$MT > 2.0 \times MFR^{-0.65};$$

and wherein the wall thereof is formed from a film having a thickness of from 50 to 1000 μm and having the following properties:

(i) the blocking force is less than 1.0 g/cm;
(ii) the number of pinholes produced in an area of 20.5 cm x 28.0 cm after torsion is repeatedly applied to the film 2,000 times by means of a Gelbo flex tester is not more than 2; and
(iii) the number of flexings, as measured in accordance with JIS P-8115, is not less than 90,000.

The ethylene copolymer [A] is preferably an ethylene/α-olefin copolymer obtained by copolymerising ethylene and an α-olefin of 3 to 20 carbon atoms in the presence of a metallocene catalyst.

The reusable package for storing and transporting fluent material according to the invention is charaterized by comprising

an outer, rigid container;
and
a soft, thin-wall, flexible inner container within the outer container and capable of receiving and storing therein fluent material and emptied and folded upon itself without failure as defined above.

The method for repeatedly transporting fluent material using the same container is characterized by comprising

a) providing at a first location a folded thin walled flexible inner container as defined above,
b) unfolding the inner container and placing the inner container within a substantially rigid transportable outer container to thereby form a bag-in-box container;
c) filling the inner container with fluent material and securing the inner and outer containers in closed condition to prevent spillage of the fluent material stored within the inner container of the bag-in-box container,
d) transporting the filled bag-in-box container to a second location remote from the first location;
e) opening the outer the inner containers and emptying the fluent material from the inner container for use at said second location;
f) removing the emptied inner container from the outer container;
g) folding the inner container upon itself and transporting the folded inner container from the second location to the first location or to a third location, and
h) repeating steps b) - g);

whereby steps b) - g) may be repeated, for instance, about 90,000 times, without replacing the flexible inner container.

The term "film" used herein means both a film and a sheet.

DETAILED DESCRIPTION OF THE INVENTION

The polyethylene resin inner container for bag in box according to the present invention will be described in detail hereinafter.

Polyethylene resin

The polyethylene resin inner container for bag in box according to the invention is formed from a polyethylene resin comprising a specific ethylene copolymer [A].

Ethylene copolymer [A]

The ethylene copolymer [A] used in the invention is a random copolymer of ethylene and an α-olefin of 3 to 20 carbon atoms.

The ethylene copolymer [A] has a density (d) of 0.880 to 0.960 g/cm$^3$, preferably 0.880 to 0.950 g/cm$^3$, more preferably 0.885 to 0.940 g/cm$^3$, particularly preferably 0.890 to 0.935 g/cm$^3$.

The density (d) is determined in the following manner. Strands obtained in the measurement of melt flow rate (MFR) at 190 °C under a load of 2.16 kg are heat-treated at 120 °C for 1 hour, then slowly cooled to room temperature over a period of 1 hour and measured on the density by means of a gradient density tube.

In the ethylene copolymer [A], it is desirable that constituent units derived from ethylene are contained in amounts of 65 to 99 % by weight, preferably 70 to 98 % by weight, more preferably 75 to 96 % by weight, and constituent units derived from the α-olefin of 3 to 20 carbon atoms are contained in amounts of 1 to 35 % by weight, preferably 2 to 30 % by weight, more preferably 4 to 25 % by weight.

The composition of the ethylene copolymer (ethylene/α-olefin copolymer) is determined by measuring a $^{13}$C-NMR spectrum of a sample obtained by homogeneously dissolving about 200 mg of the copolymer in 1 ml of hexachlorobutadiene in a sample tube 10 mm in diameter under the measuring conditions of a measuring temperature of 120 °C, a measuring frequency of 25.05 MHz, a spectrum width of 1,500 Hz, a pulse repetition time of 4.2 sec and a pulse width of 6 μsec.

Examples of the α-olefins of 3 to 20 carbon atoms employable in the invention include propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene.

The ethylene copolymer [A] has a melt flow rate (MFR) of 0.01 to 20 g/10 min, preferably 0.03 to 15 g/10 min, more preferably 0.05 to 10 g/10 min.

The melt flow rate (MFR) is determined in accordance with ASTM D 1238-65T under the conditions of a temperature of 190 °C and a load of 2.16 kg.

The ethylene copolymer [A] desirably has an intrinsic viscosity ($[\eta]$), as measured in decalin at 135 °C, of 0.8 to 4.5 dl/g, preferably 0.9 to 4.0 dl/g, more preferably 1.0 to 3.5 dl/g.

When the relation between an intrinsic viscosity ($[\eta]$) and a melt flow rate (MFR) is represented by the formula $[\eta] = K \times MFR^C$ (K and C are each a constant), the ethylene copolymer [A] has a C value of -0.140 to -0.180, and this C value of the ethylene copolymer [A] ,is higher than that of an ethylene copolymer of the same molecular weight distribution prepared by the use of a conventional titanium catalyst. The ethylene copolymer [A] for use in the invention typically has a K value of 1.6 and a C value of -0.156. On the other hand, the ethylene copolymer of the same molecular weight distribution prepared by the use of a conventional titanium catalyst typically has a K value of 1.84 and a C value of -0.194.

The ethylene copolymer [A] may have a molecular weight distribution (Mw/Mn), that is defined as a ratio of a weight-average molecular weight (Mw) to a number-average molecular weight (Mn), of generally 2.0 to 6.0.

The number of the unsaturated bonds present in molecules of the ethylene copolymer [A] is not more than 0.5 per 1,000 carbon atoms, and it is less than 1 per one molecule of the copolymer.

Since the number of the unsaturated bonds present in the ethylene copolymer [A] is small, crosslinking reaction hardly takes place when the copolymer is heated to a molten state, and therefore the copolymer shows excellent heat stability.

Quantitative determination of the unsaturated bonds is carried out in the following manner. That is, an area intensity of signals assigned to those other than double bonds (i.e., signals within the range of 10 to 50 ppm) and an area intensity of signals assigned to double bonds (i.e., signals within the range of 105 to 150 ppm) are found from an integral curve using $^{13}$C-NMR. The number of the unsaturated bonds is determined as a ratio between those intensities.

In the ethylene copolymer [A], the temperature (melting point, Tm (°C)) at the maximum peak position of its endotherm curve measured by a differential scanning calorimeter (DSC) and the density (d (g/cm$^3$)) satisfy the following relation:

$$Tm < 400 \times d - 250,$$

preferably Tm < 450 × d - 297,
more preferably Tm < 500 × d - 344,
particularly preferably Tm < 550 × d - 391.

The temperature (Tm (°C)) at the maximum peak position of an endothermic curve measured by a differential scanning calorimeter (DSC) is found out from an endotherm curve which is obtained by heating a sample of about 5 mg to 200 °C at a rate of 10 °C/min in an aluminum pan, maintaining the sample at 200 °C for 5 minutes, cooling it to room temperature at a rate of 20 °C/min and heating it at a rate of 10 °C/min. The measurement of the endotherm curve is carried out using an apparatus of DSC-7 model manufactured by Perkin Elmer Co.

Because of low Tm for the density, the above-mentioned ethylene copolymer has better heat sealing properties than the ethylene copolymer of the same density prepared by the use of a conventional titanium catalyst.

In the ethylene copolymer [A], the quantity fraction (W (% by weight)) of its n-decane-soluble component at room temperature and the density (d, (g/cm$^3$)) satisfy the following relation:
in the case of MFR ≤ 10 g/min:

$$W < 80 \times \exp(-100(d-0.88)) + 0.1,$$

preferably $W < 60 \times \exp(-100(d-0.88)) + 0.1$,
more preferably $W < 40 \times \exp(-100(d-0.88)) + 0.1$,
in the case of MFR > 10 g/min:

$$W < 80 \times (MFR-9)^{0.35} \times \exp(-100(d-0.88)) + 0.1.$$

It can be said that such ethylene copolymer has narrow composition distribution.

The quantity fraction of a n-decane-soluble component is measured in the following manner. About 3 g of a copolymer is added to 450 ml of n-decane, dissolved therein at 145 °C and cooled to room temperature. Then, the n-decane-insoluble portion is removed by filtration, and the n-decane-soluble portion is recovered from the filtrate. As the quantity fraction of the n-decane-soluble component becomes smaller, the composition distribution becomes narrower.

In the ethylene copolymer [A], the flow index (FI (l/sec)) defined as a shear rate given when a stress of a molten polymer at 190 °C reaches $2.4 \times 10^6$ dyne/cm$^2$ and the melt flow rate (MFR (10 min)) satisfy the following relation:

$$FI > 75 \times MFR,$$

preferably $FI > 80 \times MFR$,
more preferably $FI > 85 \times MFR$.

The flow index (FI) is determined by extruding a resin through a capillary with varying a shear rate and finding a shear rate corresponding to the prescribed stress. That is, using the same sample as in the MT measurement, the flow index is measured by a capillary flow tester manufactured by Toyo Seiki Seisakusho K.K. under the conditions of a resin temperature of 190 °C and a shear stress of about $5 \times 10^{-4}$ to $3 \times 10^{-6}$ dyne/cm$^2$. In this measurement, the diameter of the nozzle is varied as shown below in accordance with the MFR (g/10 min) of the resin.

MFR > 20: 0.5 mm
$20 \geq$ MFR > 3: 1.0 mm
$3 \geq$ MFR > 0.8: 2.0 mm
$0.8 \geq$ MFR: 3.0 mm

If an ethylene copolymer of a narrow composition distribution is prepared utilizing the prior technique, the molecular weight distribution of the copolymer becomes small, resulting in poor flowability and small FI. The ethylene copolymer used in the invention has the above-mentioned relation between FI and MFR, so that the shear stress can be kept low even in the high shear region, resulting in good moldability.

In the ethylene copolymer [A], further, the melt tension (MT (g)) at 190 °C and the melt flow rate (MFR (g/10 min)) satisfy the following relation:

$$MT > 2.0 \times MFR^{-0.65},$$

preferably $MT > 2.2 \times MFR^{-0.65}$,
more preferably $MT > 2.5 \times MFR^{-0.65}$.

The melt tension (MT (g)) is determined by measuring a stress given when a molten polymer is stretched at a constant rate. That is, a product polymer powder is melted and pelletized in a conventional manner to give a sample. MT of the sample is measured using a MT measuring machine (manufacture by Toyo Seiki Seisakusho K.K.) under the conditions of a resin temperature of 190 °C, a resin extrusion rate of 15 mm/min, a take-up rate of 10 to 20 m/min, a nozzle diameter of 2.09 mm and a nozzle length of 8 mm. In the pelletizing process, 0.05 % by weight of tri(2,4-di-t-butylphenyl)phosphate as a secondary antioxidant, 0.1 % by weight of n-octadecyl-3-(4'-hydroxy-3',5'-di-t-butylphenyl)propionate as a heat stabilizer and 0.05 % by weight of calcium stearate as a hydrochloric acid absorber are added.

The ethylene copolymer [A] used in the invention has higher melt tension (MT) and better moldability than conventional ethylene copolymers.

In a $^{13}$C-NMR spectrum of the ethylene copolymer [A], signals of $\alpha\beta$ and $\beta\gamma$ based on methylene sequences between the adjacent two tertiary carbon atoms in the copolymer main chain are not observed. The physical meaning of this result is described in detail in Japanese Patent Laid-Open Publication No. 121709/1987, and this result indicates that in the ethylene copolymer [A] the bond direction of the $\alpha$-olefin copolymerizable with ethylene is regular.

The ethylene copolymer [A] for use in the invention can be prepared by copolymerizing ethylene and an $\alpha$-olefin of 3 to 20 carbon atoms in the presence of a metallocene catalyst for olefin polymerization, e.g., an olefin polymerization catalyst formed from:

(a) a Group IVB transition metal compound having a bidentate ligand wherein two groups selected from specific indenyl groups and their derivatives are linked through a lower alkylene group, or a Group IVB transition metal compound containing a specific substituted cyclopentadienyl group as a ligand,
(b) an organoaluminum oxy-compound,
(c) a carrier,
and optionally
(d) an organoaluminum compound,

in such a manner that the resulting copolymer has a density of 0.880 to 0.950 g/cm$^3$.

The above process is described in detail in Japanese Patent Laid-Open Publication No. 9724/1994.

To the ethylene copolymer [A], various additives, such as weathering stabilizer, heat stabilizer, antistatic agent, anti-slip agent, anti-blocking agent, anti-fogging agent, lubricant, pigment, dye, nucleating agent, plasticizer, anti-aging agent, hydrochloric acid absorber and antioxidant, may be optionally added within limits not prejudicial to the object of the present invention. Further, other high-molecular weight compounds may be blended in small amounts, as far as no deviation from the object of the invention.

Ethylene copolymer composition [I]

In the present invention, an ethylene copolymer composition [I] comprising an ethylene copolymer [B], that is a kind of the ethylene copolymer [A], and an ethylene copolymer [C] other than the ethylene copolymer [B] is employable as a polyethylene resin other than the polyethylene resin composed of only the ethylene copolymer [A].

The ethylene copolymer [B] for constituting the ethylene copolymer composition [I] is a random copolymer of ethylene and the aforementioned $\alpha$-olefin of 3 to 20 carbon atoms.

In the ethylene copolymer [B], it is desirable that constituent units derived from ethylene are contained in amounts of 55 to 99 % by weight, preferably 65 to 98 % by weight, more preferably 70 to 96 % by weight, and constituent units derived from the $\alpha$-olefin are contained in amounts of 1 to 45 % by weight, preferably 2 to 35 % by weight, more preferably 4 to 30 % by weight.

The ethylene copolymer [B] has the following properties (B-i) to (B-vi).

(B-i) The density (d) is desirably in the range of 0.875 to 0.940 g/cm$^3$, preferably 0.890 to 0.935 g/cm$^3$, more preferably 0.900 to 0.930 g/cm$^3$.

(B-ii) The intrinsic viscosity [$\eta_B$], as measured in decalin at 135 °C, is in the range of 1.0 to 10.0 dl/g, preferably 1.25 to 8 dl/g, more preferably 1.27 to 6 dl/g. The melt flow rate (MFR) of the ethylene copolymer [B] is in the range of 0.01 to 10 g/10 min.

(B-iii) The melt tension (MT (g)) at 190 °C and the melt flow rate (MFR (g/10 min)) satisfy the following relation:

$$MT > 2.2 \times MFR^{-0.84}.$$

The ethylene copolymer [B] has high melt tension and good moldability.

(B-iv) The flow index (FI (l/sec)) defined as a shear rate given when the stress at 190 °C reaches $2.4 \times 10^6$ dyne/cm$^2$ and the melt flow rate (MFR (g/10 min)) desirably satisfy the following relation:

$$FI > 75 \times MFR,$$

preferably FI > 100 $\times$ MFR,
more preferably FI > 120 $\times$ MFR.

(B-v) The temperature (melting point, Tm (°C)) at the maximum peak position of the endothermic curve measured by a differential scanning calorimeter (DSC) and the density (d (g/cm$^3$)) desirably satisfy the following relation:

$$Tm < 400 \times d - 250,$$

preferably $Tm < 450 \times d - 297,$
more preferably $Tm < 500 \times d - 344,$
particularly preferably $Tm < 550 \times d - 391.$

(B-vi) The quantity fraction (W (% by weight)) of the n-decane-soluble component at room temperature and the density (d, (g/cm$^3$)) satisfy the following relation:

$$W < 80 \times \exp(-100(d-0.88)) + 0.1,$$

preferably $W < 60 \times \exp(-100(d-0.88)) + 0.1,$
more preferably $W < 40 \times \exp(-100(d-0.88)) + 0.1.$

It can be said that the ethylene copolymer [B] having the above-mentioned relations between the temperature (Tm) at the maximum peak position of the endotherm curve measured by a differential scanning calorimeter (DSC) and the density (d) and between the quantity fraction (W) of the n-decane-soluble component and the density (d) has a narrow composition distribution.

The ethylene copolymer [B] having the above properties can be prepared by copolymerizing ethylene and an $\alpha$-olefin of 3 to 20 carbon atoms in the presence of an olefin polymerization catalyst formed from (a) a Group IV transition metal compound containing a ligand having cyclopentadienyl skeleton, (b) an organoaluminum oxy-compound, (c) a carrier, and optionally, (d) an organoaluminum compound, in such a manner that the resulting copolymer has a density of 0.875 to 0.940 g/cm$^3$. The process for preparing the ethylene copolymer [B] is described in detail in Japanese Patent Laid-Open Publication No. 136195/1994.

The ethylene copolymer [C] for constituting the ethylene copolymer composition [I] together with the ethylene copolymer [B] is a random copolymer of ethylene and an $\alpha$-olefin of 3 to 20 carbon atoms. This ethylene copolymer [C] may be the same as or different from the ethylene copolymer [A].

In the ethylene copolymer [C], it is desirable that constituent units derived from ethylene are contained in amounts of 55 to 99 % by weight, preferably 65 to 98 % by weight, more preferably 70 to 96 % by weight, and constituent units derived from the $\alpha$-olefin are contained in amounts of 1 to 45 % by weight, preferably 2 to 35 % by weight, more preferably 4 to 30 % by weight.

The ethylene copolymer [C] has the following properties (C-i) to (C-iv).

(C-i) The density (d) is desirably in the range of 0.910 to 0.965 g/cm$^3$, preferably 0.915 to 0.955 g/cm$^3$, more preferably 0.920 to 0.950 g/cm$^3$.

(C-ii) The intrinsic viscosity [$\eta_c$], as measured in decalin at 135 °C, is in the range of 0.5 to 2.0 dl/g, preferably 0.55 to 1.9 dl/g, more preferably 0.6 to 1.8 dl/g.

(C-iii) The temperature (melting point, Tm (°C)) at the maximum peak position of the endothermic curve measured by a differential scanning calorimeter (DSC) and the density (d (g/cm$^3$)) satisfy the following relation:

$$Tm < 400 \times d - 250,$$

preferably $Tm < 450 \times d - 297,$
more preferably $Tm < 500 \times d - 344,$
particularly preferably $Tm < 550 \times d - 391.$

(C-iv) The quantity fraction (W (% by weight)) of the n-decane-soluble component at room temperature and the density (d, (g/cm$^3$)) satisfy the following relation:
in the case of MFR $\leq$ 10 g/min:

$$W < 80 \times \exp(-100(d-0.88)) + 0.1,$$

preferably $W < 60 \times \exp(-100(d-0.88)) + 0.1,$
More preferably $W < 40 \times \exp(-100(d-0.88)) + 0.1,$
in the case of MFR > 10 g/min:

$$W < 80 \times (MFR\text{-}9)^{0.26} \times \exp(-100(d\text{-}0.88)) + 0.1.$$

It can be said that the ethylene copolymer [C] having the above-mentioned relations between the temperature (Tm) at the maximum peak position of the endothermic curve measured by a differential scanning calorimeter (DSC) and the density (d) and between the quantity fraction (W) of the n-decane-soluble component and the density (d) has a narrow composition distribution.

The ethylene copolymer [C] having the above properties can be prepared by copolymerizing ethylene and an $\alpha$-olefin of 3 to 20 carbon atoms in the presence of an olefin polymerization catalyst formed from (a') a Group IV transition metal compound containing a ligand having cyclopehtadienyl skeleton, (b) an organoaluminum oxy-compound, (c) a carrier, and optionally, (d) an organoaluminum compound, in such a manner that the resulting copolymer has a density of 0.910 to 0.960 g/cm$^3$. The process for preparing the ethylene copolymer [C] is described in detail in Japanese Patent Laid-Open Publication No. 136195/1994.

In the ethylene copolymer composition comprising the ethylene copolymers [B] and [C], it is desired that the ethylene copolymer [B] is contained in an amount of 5 to 95 % by weight, preferably 10 to 90 % by weight, and the ethylene copolymer [C] is contained in an amount of 5 to 95 % by weight, preferably 10 to 90 % by weight.

The ethylene copolymers [B] and [C] are used in such a manner that a ratio of the density of the ethylene copolymer [B] to the density of the ethylene copolymer [C] ([B]/[C]) becomes less than 1, preferably 0.930 to 0.999. Further, they are used in such a manner that a ratio of the intrinsic viscosity $[\eta_B]$ of the ethylene copolymer [B] to the intrinsic viscosity $[\eta_C]$ of the ethylene copolymer [C] ($[\eta_B]/[\eta_C]$) becomes not less than 1, preferably 1.05 to 10, preferably 1.1 to 5.

The ethylene copolymer composition [I] comprising the ethylene copolymers [B] and [C] has a density of 0.880 to 0.960 g/cm$^3$, preferably 0.900 to 0.950 g/cm$^3$, and a melt flow rate (MFR) of 0.1 to 20 g/10 min, preferably 0.2 to 15 g/10 min.

To the ethylene copolymer composition [I], various additives, such as weathering stabilizer, heat stabilizer, antistatic agent, anti-slip agent, anti-blocking agent, anti-fogging agent, lubricant, pigment, dye, nucleating agent, plasticizer, anti-aging agent, hydrochloric acid absorber and antioxidant, may be optionally added within limits not prejudicial to the object of the present invention.

The ethylene copolymer composition [I] can be prepared by conventional processes, for example, the following processes.

(1) The ethylene copolymer [B], the ethylene copolymer [C] and optional additives are mechanically melt-blended, for instance, using an extruder, or a kneader.

(2) The ethylene copolymer [B], the ethylene copolymer [C] and optional additives are dissolved in an appropriate good solvent (e.g., hydrocarbon solvents such as hexane, heptane, decane, cyclohexane, benzene, toluene and xylene), followed by removing the solvent.

(3) The ethylene copolymer [B], the ethylene copolymer [C] and optional additives are each dissolved in an appropriate good solvent to prepare solutions, then those solutions are mixed, and the solvents are removed from the mixture.

(4) The above processes (1) to (3) are carried out in optional combination.

The ethylene copolymer composition [I] may be prepared by preparing the ethylene copolymer [B] and the ethylene copolymer [C] in two or more stages under different reaction conditions. Or, the composition [I] may be prepared by preparing the ethylene copolymer [B] and the ethylene copolymer [C] by means of plural polymerization reactors.

The ethylene copolymer composition [I] prepared as above has excellent heat stability and moldability.

Ethylene copolymer composition [II]

In the present invention, an ethylene copolymer composition [II] comprising the ethylene copolymer [A] and a high-pressure low-density polyethylene [D] is employable as a polyethylene resin other than the above-mentioned polyethylene resins.

The ethylene copolymer [A] for constituting the ethylene copolymer composition [II] is as described previously, but the ethylene copolymer [A] used in the composition is different from the copolymer which is used singly as the polyethylene resin, in for example preferable ranges of the density, melt flow rate (MFR), etc. Therefore, the. ethylene copolymer [A] for use in the invention is described below.

The ethylene copolymer [A] is a random copolymer of ethylene and an $\alpha$-olefin of 3 to 20 carbon atoms.

In the ethylene copolymer [A], it is desirable that constituent units derived from ethylene are contained in amounts of 55 to 99 % by weight, preferably 65 to 98 % by weight, more preferably 70 to 96 % by weight, and constituent units derived from the $\alpha$-olefin of 3 to 20 carbon atoms are contained in amounts of 1 to 45 % by weight, preferably 2 to 35 % by weight, more preferably 4 to 30 % by weight.

The ethylene copolymer [A] has a density (d) of 0.880 to 0.960 $g/cm^3$, preferably 0.890 to 0.935 $g/cm^3$, more preferably 0.905 to 0.930 $g/cm^3$.

The ethylene copolymer [A] has a melt flow rate (MFR) of 0.01 to 20 g/10 min, preferably 0.05 to 15 g/10 min, more preferably 0.1 to 10 g/10 min.

In the ethylene copolymer [A], the temperature (melting point, Tm ($^\circ$C)) at the maximum peak position of its endothermic curve measured by a differential scanning calorimeter (DSC) and the density (d ($g/cm^3$)) satisfy the following relation:

$$Tm < 400 \times d - 250,$$

preferably $Tm < 450 \times d - 297,$
more preferably $Tm < 500 \times d - 344,$
particularly preferably $Tm < 550 \times d - 391.$

In the ethylene copolymer [A], the melt tension (MT (g)) at 190 $^\circ$C and the melt flow rate (MFR (g/10 min)) satisfy the following relation:

$$MT \leq 2.2 \times MFR^{-0.64}.$$

In the ethylene copolymer [A], further, the quantity fraction (W (% by weight)) of its n-decane-soluble component at 23 $^\circ$C and the density (d, ($g/cm^3$)) satisfy the following relation:
in the case of MFR $\leq$ 10 g/min:

$$W < 80 \times \exp(-100(d-0.88)) + 0.1,$$

preferably $W < 60 \times \exp(-100(d-0.88)) + 0.1,$
More preferably $W < 40 \times \exp(-100(d-0.88)) + 0.1,$
in the case of MFR > 10 g/min:

$$W < 80 \times (MFR-9)^{0.26} \times \exp(-100(d-0.88)) + 0.1.$$

The number of the unsaturated bonds present in molecules of the ethylene copolymer [A] is not more than 0.5 per 1,000 carbon atoms, and it is not more than 1 per one molecule of the copolymer.

The ethylene copolymer [A] has a B value satisfying the conditions of $1.00 \leq B$, preferably $1.01 \leq B \leq 1.50$ more preferably $1.01 \leq 1.30$, said B value being represented by the following equation:

$$B = PoE/(2Po \cdot PE)$$

wherein PE is a molar fraction of the ethylene component contained in the copolymer, Po is a molar fraction of the $\alpha$-olefin component contained in the copolymer, and PoE is a molar faction of the $\alpha$-olefin/ethylene sequences in all the dyad sequences.

The B value is an index of each monomer distribution in the copolymer chains, and it can be determined by the above equation using the above-defined PE, Po and PoE in accordance with the reports by G.J. Ray (Macromolecules, 10, 773 (1977)), J.C. Randall (Macromolecules, 15, 353 (1982)), J. Polymer Science, Polymer Physics Ed., 11, 275 (1973)) and K. Kimura (Polymer, 25, 441 (1984)). As the B value becomes larger, the number of the block-like sequences becomes smaller, and this means that the distribution of the ethylene and $\alpha$-olefin is uniform and the composition distribution of the copolymer is narrow.

The B value is determined in the following manner. A $^{13}$C-NMR spectrum of a sample obtained by homogeneously dissolving about 200 mg of a copolymer in 1 ml of hexachlorobutadiene in a sample tube 10 mm in diameter is measured under the measuring conditions of a measuring temperature of 120 $^\circ$C, a measuring frequency of 25.05 MHz, a spectrum width of 1,500 Hz, a pulse repetition time of 4.2 sec, a pulse width of 7 $\mu$sec and a number of integration times of 2,000 to 5,000. Then, PE, Po and PoE are found from the spectrum to calculate the B value.

The ethylene copolymer [A] having the above properties can be prepared by, for example, copolymerizing ethylene and an $\alpha$-olefin of 3 to 20 carbon atoms in the presence of an olefin polymerization catalyst formed from (a) a Group IV transition metal compound containing a ligand having cyclopentadienyl skeleton, (b) an organoaluminum oxy-compound, (c) a carrier, and optionally, (d) an organoaluminum compound, in such a manner that the resulting copolymer has a density of 0.880 to 0.960 g/cm$^3$. The process for preparing the ethylene copolymer [A] is described in detail in Japanese Patent Laid-Open Publications No. 9724/1994 and No. 65443/1994.

Next, the high-pressure low-density polyethylene [D] for constituting the ethylene copolymer composition [II] together with the ethylene copolymer [A] is described in detail.

The high-pressure low-density polyethylene [D] is a polyethylene having many branches including long-chain branches, that is prepared by "high-pressure radical polymerization". This polyethylene [D] has a melt flow rate (MFR), as measured at 190 °C under a load of 2.16 kg, of 0.1 to 50 g/10 min, preferably 0.2 to 10 g/10 min, more preferably 0.2 to 8 g/10 min.

In the high-pressure low-density polyethylene [D], the molecular weight distribution (Mw/Mn, Mw: weight-average molecular weight, Mn: number-average molecular weight), as measured by gel permeation chromatography (GPC), and the melt flow rate (MFR) satisfy the following relation:

$$7.5 \times \log(MFR)\text{-}1.2 \leq Mw/Mn \leq 7.5 \times \log(MFR) +12.5,$$

preferably

$$7.5 \times \log(MFR)\text{-}0.5 \leq Mw/Mn \leq 7.5 \times \log(MFR) +12.0,$$

more preferably

$$7.5 \times \log(MFR) \leq Mw/Mn \leq 7.5 \times \log(MFR) +12.0.$$

The molecular weight distribution (Mw/Mn) of the high-pressure low-density polyethylene [D] was measured in the following manner using GPC-150C manufactured by Millipore Co.

A separatory column of TSK-GNH-HT having a diameter of 72 mm and a length of 600 mm was used. The column temperature was preset at 140 °C. A sample (concentration: 0.1 % by weight, quantity: 500 microliters) was moved in the column at a rate of 1.0 ml/min using o-dichlorobenzene (available from Wako Pure Chemical Industries, Ltd.) as a mobile phase and 0.025 % by weight of BHT (available from Takeda Chemical Industries, LTD.) as an antioxidant. A differential refractometer was used as a detector. With regard to standard polystyrenes, polystyrenes available from TOSOH K.K. were used as those of Mw<1,000 and Mw>4$\times$10$^6$, and polystyrenes available from Pressure Chemical Co. were used as those of 1,000<Mw<4$\times$10$^6$.

The high-pressure low-density polyethylene [D] desirably has a density (d) of 0.910 to 0.930 g/cm$^3$.

The density is determined in the following manner. Strands obtained in the measurement of melt flow rate (MFR) at 190 °C under a load of 2.16 kg are heat-treated at 120 °C for 1 hour, then slowly cooled to room temperature over a period of 1 hour and measured on the density by means of a gradient density tube.

In the high-pressure low-density polyethylene [D], a swell ratio indicating degrees of the long-chain branches, namely, a ratio of a diameter (Ds) of a strand extruded from a nozzle having an inner diameter (D) of 2.0 mm and a length of 15 mm at an extrusion rate of 10 mm/min at 190 °C using a capillary flow tester to a nozzle diameter (D) is desirably not less than 1.3 (Ds/D).

The high-pressure low-density polyethylene [D] used in the invention may be a copolymer of ethylene and polymerizable monomers such as other $\alpha$-olefins, vinyl acetate and acrylic esters, provided that the object of the invention is not marred.

In the ethylene copolymer composition [II] comprising the ethylene copolymer [A] and the high-pressure low-density polyethylene [D], a weight ratio between the ethylene copolymer [A] and the high-pressure low-density polyethylene [D] ([A] : [D]) is in the range of 99 : 1 to 65 : 35, preferably 90 : 10 to 65 : 35, more preferably 80 : 20 to 65 : 35. In other words, the polyethylene resin comprising this composition [II] includes the ethylene copolymer [A] in an amount of 99 to 65 % by weight, preferably 90 to 65 % by weight, more preferably 80 to 65 % by weight, and the high-pressure low-density polyethylene [D] in an amount of 1 to 35 % by weight, preferably 10 to 35 % by weight, more preferably 20 to 35 % by weight.

If the proportion of the high-pressure low-density polyethylene [D] is smaller than the above-mentioned one, improvement in the melt tension may become insufficient. If the proportion thereof is larger than the above-mentioned one, the anti-pinhole properties and the flex resistance are markedly lowered.

The ethylene copolymer composition [II] comprising the ethylene copolymer [A] and the high-pressure low-density polyethylene [D] has a density of 0.880 to 0.950 $g/cm^3$, preferably 0.885 to 0.950 $g/cm^3$, and a melt flow rate (MFR) of 0.01 to 20 g/10 min, preferably 0.03 to 15 g/10 min.

To the ethylene copolymer composition [II], various additives, such as weathering stabilizer, heat stabilizer, antistatic agent, anti-slip agent, anti-blocking agent, anti-fogging agent, lubricant, pigment, dye, nucleating agent, plasticizer, anti-aging agent, hydrochloric acid absorber and antioxidant, may be optionally added within limits not prejudicial to the object of the present invention.

The ethylene copolymer composition [II] can be prepared by conventional processes, for example, the following processes.

(1) The ethylene copolymer [A], the high-pressure low-density polyethylene [D] and optional additives are mechanically melt-blended, for instance, using an extruder or a kneader.

(2) The ethylene copolymer [A], the high-pressure low-density polyethylene [D] and optional additives are dissolved in an appropriate good solvent (e.g., hydrocarbon solvents such as hexane, heptane, decane, cyclohexane, benzene, toluene and xylene), followed by removing the solvent.

(3) The ethylene copolymer [A], the high-pressure low-density polyethylene [D] and optional additives are each dissolved in an appropriate good solvent to prepare solutions, then those solutions are mixed, and the solvents are removed from the mixture.

(4) The above processes (1) to (3) are carried out in an optional combination.

The ethylene copolymer composition [II] prepared as above shows excellent moldability because of high melt tension and low stress in the high shear region.

Ethylene copolymer composition [III]

In the present invention, an ethylene copolymer composition [III] comprising the ethylene copolymer composition [I] and the high-pressure low-density polyethylene [D] is employable as a polyethylene resin other than the above-mentioned polyethylene resins.

In the ethylene copolymer composition [III], a weight ratio between the ethylene copolymer composition [I] and the high-pressure low-density polyethylene [D] ([I] : [D]) is in the range of 99 : 1 to 65 : 35, preferably 95 : 5 to 65 : 35, more preferably 90 : 10 to 65 : 35.

If the proportion of the high-pressure low-density polyethylene [D] is smaller than the above-mentioned one, improvement in the melt tension may become insufficient. If the proportion thereof is larger than the above-mentioned one, the anti-pinhole properties and the flex resistance are markedly lowered.

The ethylene copolymer composition [III] can be prepared by conventional processes, for example, the following processes.

(1) The ethylene copolymer composition [I], the high-pressure low-density polyethylene [D] and optional additives are mechanically melt-blended, for instance, using an extruder or a kneader.

(2) The ethylene copolymer composition [I], the high-pressure low-density polyethylene [D] and optional additives are dissolved in an appropriate good solvent (e.g., hydrocarbon solvents such as hexane, heptane, decane, cyclohexane, benzene, toluene and xylene), followed by removing the solvent.

(3) The ethylene copolymer composition [I], the high-pressure low-density polyethylene [D] and optional additives are each dissolved in an appropriate good solvent to prepare solutions, then those solutions are mixed, and the solvents are removed from the mixture.

(4) The above processes (1) to (3) are carried out in optional combination.

To the ethylene copolymer composition [III], various additives, such as weathering stabilizer, heat stabilizer, antistatic agent, anti-slip agent, anti-blocking agent, anti-fogging agent, lubricant, pigment, dye, nucleating agent, plasticizer, anti-aging agent, hydrochloric acid absorber and antioxidant, may be optionally added within limits not prejudicial to the object of the present invention.

The ethylene copolymer composition [III] obtained as above has excellent heat stability and moldability.

The polyethylene resin composed of the ethylene copolymer [A], the ethylene copolymer composition [I], the ethylene copolymer composition [II] or the ethylene copolymer composition [III] has a good balance between the melt tension and the moldability in extrusion molding process or hollow molding process and is greatly improved in the processability, as compared with conventional medium- or low-pressure ethylene copolymers.

Polyethylene resin inner container for bag in box

The polyethylene resin inner container for bag in box according to the invention is formed from a film of the above-described polyethylene resin.

The thickness of the film for forming the polyethylene resin inner container for bag in box varies depending on the content of the container or the preparation process of the container, but it is in the range of generally 50 to 1,000 µm, preferably 50 to 700 µm.

The film for forming the polyethylene resin inner container for bag in box preferably has the following properties:

(i) the blocking force is less than 1.0 g/cm;

(ii) the number of pinholes produced in an area of 20.5 cm × 28.0 cm after repeated torsion of 2,000 times is applied to the film by means of a Gelbo flex tester is not more than 2; and

(iii) the number of flexings, as measured in accordance with JIS P-8115, is not less than 90,000.

In addition, the neck-in of the film during the molding process is preferably not more than 20 cm on one side.

The polyethylene resin inner container for bag in box according to the invention may be formed from a single-layer film made of the polyethylene resin or a multi-layer film consisting of a layer of the polyethylene resin and layers of other resins (e.g., nylon, ethylene/vinyl alcohol copolymer resin (EVOH), polyvinyl alcohol, adhesive resin).

Process for preparing polyethylene resin inner container for bag in box

The polyethylene resin inner container for bag in box (BIB) according to the invention can be prepared by, for example, the following processes.

(i) A molten polyethylene resin is extruded into two sheets from T-dies arranged in parallel with each other in the lengthwise direction, followed by vacuum molding using a mold having such a shape that peripheries of halves of the resulting container can be joined with their diagonals.

(ii) A molten resin is extruded from a circular die (parison extrusion method) into a cylindrical form, followed by hollow molding using the same mold as mentioned above.

(iii) Two or more of polyethylene resin films superposed one upon another are heat-sealed at their four sides to form a bag. In this process, each of the films may be a single-layer film made of the polyethylene resin or a multi-layer film consisting of a layer of the polyethylene resin and layers of other resins (e.g., nylon, ethylene/vinyl alcohol copolymer resin (EVOH), polyvinyl alcohol, adhesive resin).

EFFECT OF THE INVENTION

The polyethylene resin inner container for bag in box according to the invention is formed from a polyethylene resin of high heat stability and moldability, and shows excellent blocking resistance, anti-pinhole properties and flex resistance.

The polyethylene resin inner container for bag in box has good handling properties and can be folded so that one half of the container lies on the other half thereof.

The package for storing and transporting fluent material according to the invention can be repeatedly filled with fluent material and emptied and folded upon itself, for instance, for about 90,000 times without failure since the polyethylene resin inner container for bag in box according to the invention is used as a wall of an inner container.

The method for transporting fluent material according to the invention can lower the cost for storing and transporting since the flexible inner container can be used repeatedly, for instance, about 90,000 times without replacing.

EXAMPLES

The present invention will be further described with reference to the following examples.

Described below are definitions of property values, measuring methods of property values and molding methods used herein.

(1) Granulation of copolymer or copolymer composition

100 Parts by weight of a powdery copolymer or copolymer composition is blended with 0.05 part by weight of tri(2,4-di-t-butylphenyl)phosphate as a secondary antioxidant, 0.1 part by weight of n-octadecyl-3-(4'-hydroxy-3',5'-di-t-butylphenyl)propionate as a heat stabilizer and 0.05 part by weight of calcium stearate as a hydrochloric acid absorber. Then, the blend is melt extruded by a twin-screw conical-tapered extruder manufactured by Harque Co. at a preset temperature of 180 °C, to prepare granular pellets.

(2) Density

Strands obtained in the measurement of melt flow rate (MFR) at 190 °C under a load of 2.16 kg are heat-treated at 120 °C for 1 hour and slowly cooled to room temperature over a period of 1 hour. Then, the density of a copolymer or a copolymer composition is measured by a gradient density tube.

(3) Composition of copolymer

The composition of a copolymer is determined by $^{13}$C-NMR. That is, a $^{13}$C-NMR spectrum of a sample obtained by homogeneously dissolving about 200 mg of a copolymer in 1 ml of hexachlorobutadiene in a sample tube 10 mm in diameter is measured under the measuring conditions of a measuring temperature of 120 °C, a measuring frequency of 25.05 MHz, a spectrum width of 1,500 Hz, a pulse repetition time of 4.2 sec and a pulse width of 6 $\mu$sec.

(4) Melt flow rate (MFR)

The melt flow rate (MFR) is determined in accordance with ASTM D 1238-65T under the conditions of a temperature of 190 °C and a load of 2.16 kg using granular pellets of a copolymer or a copolymer composition.

(5) Intrinsic viscosity ([η])

The intrinsic viscosity ([η]) is a value measured by the use of a decalin solvent at 135 °C. That is, about 20 mg of granular pellets are dissolved in 15 ml of decalin, and the specific viscosity ($\eta_{SP}$) of the resulting solution is measured in an oil bath at 135 °C. To the decalin solution is then diluted with 5 ml of a decalin solvent, and the specific viscosity ($\eta_{SP}$) of the resulting solution is measured. This dilution operation is further repeated twice. Thus, a value of $\eta_{SP}/C$ given when the concentration (C) is extrapolated to 0 is obtained as the intrinsic viscosity.

$$[\eta] = \lim(\eta_{SP}/C) \qquad (C \to 0)$$

(6) Molecular weight distribution (Mw/Mn)

The molecular weight distribution (Mw/Mn) is measured by means of GPC model ALC-GPC-150C manufactured by Waters Co. The measurement is carried out at 140 °C using a column of PSK-GMH-HT (available from TOSOH K.K.) and using orthodichlorobenzene (ODCB) as a solvent.

(7) Quantitative determination of unsaturated bonds

Quantitative determination of the unsaturated bonds is made in the following manner. That is, an area intensity of signals assigned to those other than double bonds (i.e., signals within the range of 10 to 50 ppm) and an area intensity of signals assigned to double bonds (i.e., signals within the range of 105 to 150 ppm) are found from an integral curve by means of $^{13}$C-NMR, and the number of the unsaturated bonds is determined as a ratio between those intensities..

(8) Measurement of maximum peak temperature (Tm)

The measurement of the endothermic curve is carried out using an apparatus of DSC-7 model manufactured by Perkin Elmer Co. The temperature (Tm (°C)) at the maximum peak position of an endothermic curve is determined from an endothermic curve which is obtained by heating a sample of about 5 mg to 200 °C at a rate of 10 °C/min in an aluminum pan, maintaining the sample at 200 °C for 5 minutes, cooling it to room temperature at a rate of 20 °C/min and heating it at a rate of 10 °C/min.

(9) Quantity fraction (W) of n-decane-soluble component (W)

The quantity fraction (W) of a n-decane-soluble component is measured in the following manner. About 3 g of a copolymer is added to 450 ml of n-decane, dissolved therein at 145 °C and cooled to room temperature. The n-decane-insoluble portion is removed by filtration, and the n-decane-soluble portion is recovered from the filtrate.

The quantity fraction (W) of a n-decane-soluble component is defined by the following formula:

$$W (\%) = (W2/W1) \times 100$$

W1: total weight of n-decane-insoluble and n-decane-soluble portions.
W2: weight of n-decane-soluble portion

The smaller is the quantity fraction of its n-decane-soluble component, the narrower is the composition distribution.

(10) Melt tension (MT)

The melt tension (MT (g)) is determined by measuring a stress at the time when a molten polymer is stretched at a constant rate. That is, granular pellets of a copolymer are used as a sample to be measured, and the measurement is carried out using a MT measuring machine (manufacture by Toyo Seiki Seisakusho K.K.) under the conditions of a resin temperature of 190 °C, a resin extrusion rate of 15 mm/min, a take-up rate of 10 to 20 m/min, a nozzle diameter of 2.09 mm and a nozzle length of 8 mm

(11) Flow index (FI)

The flow index (FI) is defined as a shear rate given when the stress of a molten polymer at 190 °C reaches $2.4 \times 10^6$ dyne/cm$^2$. The flow index (FI) is determined by extruding a resin through a capillary with varying a shear rate and finding a shear rate corresponding to the prescribed stress. That is, using the same sample as in the MT measurement, the flow index is measured by a capillary flow tester manufactured by Toyo Seiki Seisakusho K.K. under the conditions of a resin temperature of 190 °C and a shear stress of about $5 \times 10^4$ to $3 \times 10^6$ dyne/cm$^2$.

In this measurement, the diameter of the nozzle is varied as shown below in accordance with the MFR (g/10 min) of the resin.

MFR > 20: 0.5 mm
$20 \geq$ MFR > 3: 1.0 mm
$3 \geq$ MFR > 0.8: 2.0 mm
$0.8 \geq$ MFR: 3.0 mm

(12) Process for preparing inner container for BIB

Granular pellets of a polyethylene resin composed of a copolymer or a copolymer composition are used as a sample. From two T-dies (width: 800 mm, lip opening: 1.2 mm) arranged in parallel with each other at a distance of 50 mm and equipped on a single-screw extruder (diameter: 65 mm, L/D = 28), the sample was melt extruded into two sheets (each thickness: 1 mm) under the conditions of an extrusion rate of 8 kg/min per die, a sheet extrusion rate of 5 mm/min and a resin temperature of 200 °C. Then, vacuum molding was immediately performed using a mold having such a shape that peripheries of halves of the resulting container can be joined with their diagonals, to form a 20-liter inner container for bag in box. The wall thickness of a side of the inner container thus formed is almost 500 μm. A uniform part of the side was cut to give a sample, and the sample was subjected to the following film property evaluation tests.

(13) Film property evaluation tests

(a) Anti-pinhole properties

Anti-pinhole properties test was carried out in accordance with United States Military Standard. MIL B131. That is, the number of pinholes produced in an area of 20.5 cm $\times$ 28.0 cm after repeated torsion of 2,000 times is applied to the film by means of a Gelbo flex tester was counted, and the anti-pinhole properties were evaluated by the number of pinholes.

(b) Flex resistance

A flex test was carried out in accordance with JIS P-8115 to seek the number of flexings given when the test specimen was broken. The flex resistance was evaluated by the number of flexings.

(c) Blocking force

Two film samples having a size of 7 cm (width ) $\times$ 20 cm were piled and sandwiched between two sheets of typing paper, then further sandwiched between two glass plates, and thereto was applied a load of 10 kg in an air bath at 50 °C for 24 hours. Then, the films were separated at a rate of 200 mm/min by means of a gripping tool. A load applied in the separation operation was taken as A (g), and the blocking force (F (g/cm)) was represented by the equation: F = A/width of specimen. When the F value is small, the film has small blocking tendency, that is, the blocking resistance is good.

Examples using polyethylene resin composed of ethylene copolymer only

Example 1

Preparation of catalyst component

In 121 liters of toluene, 7.9 kg of silica having been dried at 250 °C for 10 hours was suspended, and the suspension was cooled to 0 °C. Then, 41 liters of a toluene solution of methylaluminoxane (Al = 1.47 mol/l) was dropwise added over a period of 1 hour. During the addition, the temperature of the system was maintained at 0 °C. Subsequently, the reaction was performed at 0 °C for 30 minutes, and the temperature was then raised up to 95 °C over a period of 1.5 hours, followed by performing reaction at this temperature for 4 hours. Thereafter, the system was cooled to 60 °C, and the supernatant liquid was removed by decantation. The solid obtained was washed twice with toluene and resuspended in 125 liters of toluene. To the system, 20 liters of a toluene solution of bis(1,3-dimethylcyclopentadienyl) zirconium dichloride (Zr = 28.4 mmol/l) was dropwise added at 30 °C over a period of 30 minutes, to perform reaction at 30 °C for 2 hours. Then, the supernatant liquid was removed, and the remainder was washed twice with hexane to obtain a solid catalyst containing 4.6 mg of zirconium per 1 g of the catalyst.

Preparation of prepolymerized catalyst

To 160 liters of hexane containing 16 mol of triisobutylaluminum, 4.3 kg of the solid catalyst obtained above was added, and prepolymerization of ethylene was carried out at 35 °C for 3.5 hours. Thus, a prepolymerized catalyst, in which 3 g of an ethylene polymer per 1 g of the solid catalyst was produced by the prepolymerization, was obtained. The ethylene polymer had an intrinsic viscosity [η] of 1.27 dl/g.

Polymerization

In a continuous fluidized bed gas phase polymerization reactor, copolymerization of ethylene and 1-hexene was carried out under the conditions of a total pressure of 20 kg/cm$^2$-G and a polymerization temperature of 80 °C. In this copolymerization, to the system were continuously fed the above-prepared prepolymerized catalyst at a feed rate of 0.05 mmol/hr (in terms of zirconium atom) and triisobutylaluminum at a feed rate of 10 mmol/hr. In order to maintain the gas composition constant during the polymerization, ethylene, 1-hexene, hydrogen and nitrogen were continuously fed to the system (gas composition: 1-hexene/ethylene = 0.018, hydrogen/ethylene = 0.0012, ethylene concentration = 25 %). The yield of the polymer was 5.2 kg/hr.
Though the results of analysis of the polymer are set forth in Table 1 in detail, the density was 0.927 g/cm, MFR was 1.0 g/10 min, the number of the unsaturated bonds was 0.062 per 1,000 carbon atoms and was 0.11 per one molecule of the copolymer, the maximum peak temperature (Tm) of the endotherm curve measured by DSC was 117.8 °C, and the quantity fraction of the n-decane-soluble component at room temperature was 0.22 % by weight.
The ethylene copolymer was molded into an inner container for bag in box by the aforementioned molding process. The results of evaluation of the inner container are set forth in Table 2.

Examples 2 - 6

Copolymerization of ethylene and α-olefins was carried out in the same manner as in Example 1 except that various α-olefins shown in Table 1 were used as comonomers, to prepare ethylene copolymers.

The results of analysis of the ethylene copolymers are set forth in Table 1.

The ethylene copolymers were molded into inner containers for bag in box by the aforementioned molding process. The results of evaluation of the inner containers are set forth in Table 2.

Comparative Example 1

An ethylene/4-methyl-1-pentene copolymer was prepared in a cyclohexane solvent using a $MgCl_2$ support type Ti catalyst.

The results of analysis of the ethylene copolymer are set forth in Table 1.

The ethylene copolymer was molded into an inner container for bag in box by the aforementioned molding process. The results of evaluation of the inner container are set forth in Table 2.

It has been confirmed that the copolymer of this comparative example has larger quantity of the n-decane-soluble portion, higher Tm and lower balance between FI and MT, as compared with the copolymer of Example 4 prepared by the use of the same comonomer (4-methyl-1-pentene) and having almost the same MFR and density. From the results of evaluation of the inner container for bag in box, it has been confirmed that the inner container of this comparative example is inferior in all the anti-pinhole properties, flex resistance and blocking resistance.

Comparative Example 2

An ethylene/1-hexene copolymer was prepared in a gas phase using a $MgCl_2$ support type Ti catalyst.

The results of analysis of the ethylene copolymer are set forth in Table 1.

The ethylene copolymer was molded into an inner container for bag in box by the aforementioned molding process. The results of evaluation of the inner container are set forth in Table 2.

From Table 1, it has been confirmed that the copolymer of this comparative example has larger quantity of the n-decane-soluble portion, higher Tm and lower balance between FI and MT, as compared with the copolymer of Example 2 prepared by the use of the same comonomer (1-hexene) and having almost the same MFR and density. From Table 2, it has been confirmed that the inner container for bag in box of this comparative example is inferior in all the anti-pinhole properties, flex resistance and blocking resistance.

Comparative example 3

Pellets were prepared in the same manner as in Comparative Example 1 except that 80 parts by weight of the ethylene copolymer was previously blended with 20 parts by weight of an ethylene/vinyl acetate copolymer [MFR (190 $^\circ$C) : 0.5 g/10 min, vinyl acetate content: 10 % by weight, density: 0.956 g/cm$^3$] in the granulation of the ethylene copolymer.

MFR, density and quantity fraction of the n-decane-soluble component of the polymer obtained are set forth in Table 1.

The polymer was molded into an inner container for bag in box by the aforementioned molding process. The results of evaluation of the inner container are set forth in Table 2.

Comparative example 4

Pellets were prepared in the same manner as in Comparative Example 3 except that 35 parts of high-pressure low-density polyethylene [MFR (190 $^\circ$C): 0.6 g/10 min, density: 0.920 g/cm$^3$] was used in place of the ethylene/vinyl acetate copolymer and the amount of the ethylene copolymer powder was varied to 65 parts by weight.

MFR, density and quantity fraction of the n-decane-soluble component of the polymer obtained are set forth in Table 1.

The polymer was molded into an inner container for bag in box by the aforementioned molding process. The results of evaluation of the inner container are set forth in Table 2.

Comparative Example 5

The ethylene/vinyl acetate copolymer used in Comparative Example 3 was molded into an inner container for bag in box by the aforementioned molding process.

The results of evaluation of the inner container are set forth in Table 2.

Table 1-a

[Ethylene (co)polymer]

| | Comonomer | | MFR | Inrinstic Viscosity |
|---|---|---|---|---|
| | Kind | Content (mol%) | (g/10 min) | $[\eta]$ (dl/g) |
| Example 1 | 1-hexene | 1.9 | 1.0 | 1.61 |
| Example 2 | 1-hexene | 2.5 | 1.0 | 1.60 |
| Example 3 | 1-pentene | 2.6 | 2.1 | 1.41 |
| Example 4 | 4-methyl-1-pentene | 2.3 | 2.0 | 1.44 |
| Example 5 | 1-butene | 2.5 | 2.0 | 1.46 |
| Example 6 | 1-hexene | 3.0 | 2.0 | 1.42 |
| Comp. Ex. 1 | 4-methyl-1-pentene | 2.5 | 2.0 | 1.67 |
| Comp. Ex. 2 | 1-hexene | 3.6 | 1.0 | 1.91 |
| Comp. Ex. 3 | - | - | 1.5 | - |
| Comp. Ex. 4 | - | - | 1.3 | - |
| Comp. Ex. 5 | - | - | 0.5 | - |

Table 1-b

[Ethylene (co)polymer]

| | Mw/Mn | Density (g/cm³) | Quantity fraction of n-decane-soluble comoponent (W) (wt%) | Value of formula (1) *1 |
|---|---|---|---|---|
| Example 1 | 3.0 | 0.927 | 0.22 | 0.82 |
| Example 2 | 2.9 | 0.922 | 0.26 | 1.30 |
| Example 3 | 2.9 | 0.920 | 0.08 | 1.57 |
| Example 4 | 3.0 | 0.921 | 0.25 | 1.76 |
| Example 5 | 2.7 | 0.926 | 0.57 | 0.90 |
| Example 6 | 2.9 | 0.920 | 0.47 | 1.57 |
| Comp. Ex. 1 | 3.2 | 0.922 | 1.9 | 1.30 |
| Comp. Ex. 2 | 4.1 | 0.922 | 7.9 | 1.30 |
| Comp. Ex. 3 | − | 0.928 | 1.6 | − |
| Comp. Ex. 4 | − | 0.921 | 1.4 | − |
| Comp. Ex. 5 | − | 0.956 | 0.12 | − |

*1) MFR ≤ 10 g/10 min:
 $W < 80 \times \exp(-100(d-0.88)) + 0.1$     ...formula (1)
 MFR > 10 g/10 min:
 $W < 80 \times (MFR-9)^{0.35} \times \exp(-100(d-0.88)) + 0.1$
                                    ... formula (1)

Table 1 (Continued)

[Ethylene (co)polymer]

| | Tm (°C) | Value of formula (2) *2 | MT (g) | Value of formula (3) *3 | FI (S⁻¹) | Value of formula (4) *4 |
|---|---|---|---|---|---|---|
| Ex. 1 | 117.8 | 120.8 | 3.2 | 2.0 | 180 | 75 |
| Ex. 2 | 111.2 | 118.8 | 3.6 | 2.0 | 200 | 75 |
| Ex. 3 | 111.9 | 118.0 | 1.7 | 1.2 | 270 | 158 |
| Ex. 4 | 112.0 | 118.4 | 1.9 | 1.3 | 280 | 150 |
| Ex. 5 | 111.5 | 120.4 | 1.9 | 1.3 | 270 | 150 |
| Ex. 6 | 111.2 | 118.0 | 1.8 | 1.3 | 290 | 150 |
| Comp. Ex. 1 | 123.5 | 118.8 | 1.4 | 1.3 | 250 | 150 |
| Comp. Ex. 2 | 123.2 | 118.8 | 1.8 | 2.0 | 190 | 75 |
| Comp. Ex. 3 | – | – | 3.2 | – | – | – |
| Comp. Ex. 4 | – | – | 4.3 | – | – | – |
| Comp. Ex. 5 | – | – | 5.1 | – | – | – |

*2) $Tm < 400 \times d - 250$ ... formula (2)
*3) $MT > 2.0 \times MFR^{-0.65}$ formula (3)
*4) $FI > 75 \times MFR$ ... formula (4)

Table 2

| Properties of inner container | | | | |
|---|---|---|---|---|
| | Blocking force (g/cm) | Moldability *1 | Anti-pinhole properties (number of pinholes) | Flex resistance (flexing times) |
| Example 1 | 0 | AA | 0 | > 100000 |

*1) Moldability: evaluated by film width at a distance of 50 cm from the die end when a molten resin is allowed to spontaneously sag from T-die.
AA: film width ≥ 60 cm
BB: 60 cm > film width ≥ 50 cm
CC: 50 cm > film width ≥ 40 cm
DD: 40 cm > film width

Table 2  (continued)

| | Blocking force (g/cm) | Moldability *1 | Anti-pinhole properties (number of pinholes) | Flex resistance (flexing times) |
|---|---|---|---|---|
| | | Properties of inner container | | |
| Example 2 | 0.15 | AA | 0 | > 100000 |
| Example 3 | 0.27 | CC | 0 | > 100000 |
| Example 4 | 0.13 | BB | 0 | > 100000 |
| Example 5 | 0.78 | BB | 2 | 98500 |
| Example 6 | 0.21 | BB | 0 | > 100000 |
| Comp. Ex. 1 | 0.83 | DD | 7 | 72000 |
| Comp. Ex. 2 | 4.0 | BB | 7 | 85000 |
| Comp. Ex. 3 | 0.67 | BB | 11 | 32000 |
| Comp. Ex. 4 | 0.51 | AA | 17 | 23000 |
| Comp. Ex. 5 | 0.10 | AA | 26 | 5000 |

*1) Moldability: evaluated by film width at a distance of 50 cm from the die end when a molten resin is allowed to spontaneously sag from T-die.
   AA: film width $\geq$ 60 cm
   BB: 60 cm > film width $\geq$ 50 cm
   CC: 50 cm > film width $\geq$ 40 cm
   DD: 40 cm > film width

Examples using polyethylene resin composed of ethylene copolymer composition [I]

Preparation Example 1

Preparation of ethylene copolymer [B]

Polymerization

In a continuous fluidized bed gas phase polymerization reactor, copolymerization of ethylene and 1-hexene was carried out under the conditions of a total pressure of 18 kg/cm$^2$-G and a polymerization temperature of 75 °C. In this copolymerization, to the system were continuously fed the prepolymerized catalyst used in Example 1 at a feed rate of 0.05 mmol/hr (in terms of zirconium atom) and triisobutylaluminum at a feed rate of 10 mmol/hr. In order to maintain the gas composition constant during the polymerization, ethylene, 1-hexene, hydrogen and nitrogen were continuously fed to the system (gas composition: 1-hexene/ethylene = 0.041, hydrogen/ethylene = 0.0011, ethylene concentration = 10 %).

The yield of the ethylene/1-hexene copolymer (a-1) was 6.0 kg/hr. The density was 0.906 g/cm, MFR was 0.32 g/10 min, the maximum peak temperature (Tm) of the endotherm curve measured by DSC was 92.5 °C, the melt tension at 190 °C was 6.2 g, the flow index was 89 l/sec, the quantity fraction of the n-decane-soluble component at room temperature was 0.52 % by weight, and the number of the unsaturated bonds was 0.09 per 1,000 carbon atoms and was 0.90 per one molecule of the copolymer.

Example 7

The ethylene/1-hexene copolymer (a-1) (density: 0.9 g/cm$^3$) obtained in Preparation Example 1 and an ethylene/1-hexene copolymer (b-1) ((density: 0.949 g/cm$^3$) prepared in the same manner as in Preparation Example 1 except that the comonomer content was adjusted as shown in Table 3 were melt kneaded in a weight ratio of 57/43 (a-1/b-1), to obtain an ethylene copolymer composition.

The ethylene copolymer composition had a density of 0.926 g/cm$^3$ and MFR of 1.1 g/10 min.

The melt properties of the ethylene copolymer composition are set forth in Table 4.

The composition was molded into an inner container for bag in box by the aforementioned molding process. The results of evaluation of the inner container are set forth in Table 4.

Example 8

An ethylene/1-hexene copolymer (a-2) (density: 0.907 g/cm$^3$) and an ethylene/1-hexene copolymer (b-2) ((density: 0.943 g/cm$^3$), each being prepared in the same manner as in Preparation Example 1 except that the comonomer content was adjusted as shown in Table 3, were melt kneaded in a weight ratio of 60/40 (a-2/b-2), to obtain an ethylene copolymer composition.

The ethylene copolymer composition had a density of 0.921 g/cm$^3$ and MFR of 2.0 g/10 min.

The melt properties of the ethylene copolymer composition are set forth in Table 4.

The ethylene copolymer composition was molded into an inner container for bag in box in the same manner as in Example 1.

The results of evaluation of the inner container are set forth in Table 4.

Comparative Example 6

An ethylene/1-hexene copolymer (a-4) (density: 0.915 g/cm$^3$) and an ethylene/1-hexene copolymer (b-4) ((density: 0.933 g/cm$^3$), each being prepared in the same manner as in Preparation Example 1 except that bis (1,3-dimethylcyclopentadienyl)zirconium dichloride was replaced with a titanium catalyst component described in Japanese Patent Publication No. 54289/1988, methylaluminoxane was replaced with triethylaluminum and the comonomer content was adjusted as shown in Table 3, were melt kneaded in a weight ratio of 60/40 (a-4/b-4), to obtain an ethylene copolymer composition.

The ethylene copolymer composition had a density of 0.922 g/cm$^3$ and MFR of 2.0 g/10 min.

The melt properties of the ethylene copolymer composition are set forth in Table 4.

The ethylene copolymer composition was molded into an inner container for bag in box in the same manner as in Example 1.

The results of evaluation of the inner container are set forth in Table 4.

From Tables 3 and 4, it has been confirmed that the ethylene copolymer composition obtained in Comparative Example 6 has lower melt tension, as compared with the ethylene copolymer composition of Example 8 having almost the same density and MFR, and the resulting inner container for bag in box is inferior in the moldability, anti-pinhole properties, flex resistance and blocking resistance.

Comparative Example 7

An ethylene/1-hexene copolymer (c-1) was prepared in the same manner as in Comparative Example 6 except that the comonomer content was adjusted as shown in Table 3.

The ethylene/1-hexene copolymer (c-1) had a density of 0.922 g/cm$^3$ and MFR of 1.9 g/10 min, and these properties were the same as those of the ethylene copolymer composition prepared in Comparative Example 6.

The ethylene/1-hexene copolymer was molded into an inner container for bag in box in the same manner as in Example 1.

The results of evaluation of the inner container are set forth in Table 4.

From Tables 3 and 4, it has been confirmed that the ethylene/1-hexene copolymer obtained in Comparative Example 7 is lower in the improvement of flowability (FI) in the high shear region, as compared with Examples 7 and 8, and the resulting inner container for bag is inferior in the moldability, anti-pinhole properties, flex resistance and blocking resistance.

Example 9

An ethylene/1-hexene copolymer (a-3) (density: 0.916 g/cm$^3$) prepared in the same manner as in Preparation Example 1 except that the comonomer content was adjusted as shown in Table 3 and an ethylene/1-hexene copolymer (b-3) ((density: 0.924 g/cm$^3$) prepared in the same manner as in Preparation Example 1 except that bis(1,3-dimethylcyclopentadienyl)zirconium dichloride was replaced with bis(1-methyl-3-n-butylcyclopentadienyl)zirconium dichloride and the comonomer content was adjusted as shown in Table 3 were melt kneaded in a weight ratio of 20/80 (a-3/b-3), to obtain an ethylene copolymer composition.

The ethylene copolymer composition had a density of 0.922 g/cm$^3$ and MFR of 1.4 g/10 min.

The ethylene copolymer composition was molded into an inner container for bag in box in the same manner as in Example 1.

The results of evaluation of the inner container are set forth in Table 4.

Table 3 [Ethylene copolymer]

| Copolymer | Comonomer | Comonomer content (mol%) | Density (g/cm³) | MFR (g/10 min) | [η] (dl/g) |
|---|---|---|---|---|---|
| a-1 | 1-hexene | 4.9 | 0.906 | 0.32 | 1.91 |
| a-2 | 1-hexene | 4.8 | 0.907 | 0.35 | 1.88 |
| a-3 | 1-hexene | 3.3 | 0.916 | 0.24 | 2.00 |
| a-4 | 1-hexene | 6.1 | 0.915 | 0.65 | 2.00 |
| b-1 | 1-hexene | 0.9 | 0.949 | 10.7 | 1.11 |
| b-2 | 1-hexene | 1.0 | 0.943 | 165 | 0.68 |
| b-3 | 1-hexene | 2.6 | 0.924 | 2.1 | 1.59 |
| b-4 | 1-hexene | 2.8 | 0.933 | 19.2 | 1.04 |
| c-1 | 1-hexene | 3.6 | 0.922 | 1.9 | 1.62 |

Table 3 [Ethylene copolymer] (continued)

| Copolymer | Tm (°C) | Value of formula (1) *1 | MT (g) | Value of formula (2) *2 | FI (S⁻¹) |
|---|---|---|---|---|---|
| a-1 | 92.5 | 112.4 | 6.2 | 5.7 | 89 |
| a-2 | 92.8 | 112.8 | 5.9 | 5.3 | 92 |
| a-3 | 107.0 | 116.4 | 7.7 | 7.3 | 63 |
| a-4 | 120.3 | 116.0 | 2.8 | 3.2 | 140 |
| b-1 | 120.1 | 129.6 | 0.1> | – | 1390 |
| b-2 | 118.6 | 127.2 | 0.1> | – | 12400 |
| b-3 | 115.0 | 119.6 | 0.9 | – | 130 |
| b-4 | 128.0 | 129.2 | 0.1> | – | 1440 |
| c-1 | 123.3 | 118.8 | 0.9 | 1.2 | 250 |

Table 3 [Ethylene copolymer] (continued)

| Copolymer | Value of formula (3) *3 | Quantity fraction of n-decane-soluble component (W) (wt%) | Value of formula (4) *4 | Unsaturated bond *5 |
|---|---|---|---|---|
| a-1 | 24 | 0.52 | 6.04 | 0.09 |
| a-2 | 27 | 0.55 | 5.48 | 0.12 |
| a-3 | 18 | 0.15 | 2.29 | 0.16 |
| a-4 | 49 | 13.5 | 2.50 | 0.23 |
| b-1 | – | 0.08 | 0.19 | 0.06 |
| b-2 | – | 0.45 | 0.65 | 0.08 |
| b-3 | – | 0.08 | 1.08 | 0.10 |
| b-4 | – | 2.20 | 0.83 | 0.28 |
| c-1 | 140 | 8.20 | 1.30 | 0.26 |

*1) $Tm < 400 \times d - 250$ ... formula (1)
*2) $MT > 2.2 \times MFR^{-0.84}$ ... formula (2)
*3) $FI > 75 \times MFR$ ... Formula (3)
*4) $MFR \leq 10$ g/10 min:
$W < 80 \times \exp(-100(d-0.88)) + 0.1$ ... Formula (4)
$MFR > 10$ g/10 min:
$W < 80 \times (MFR-9)^{0.26} \times \exp(-100(d-0.88)) + 0.1$
...Formula (4)
*5) Number of unsaturated bondes per 1,000 carbon atoms
in ethylene/$\alpha$-olefin copolymer
*6) Copolymers of a-1, a-2, a-3, b-1, b-2 and b-3:
Zr catalyst, gas phase polymerization
Copolymers of a-4, b-4 and c-1:
Ti catalyst, gas phase polymerization

Table 4-a

| Composition | Component | | Mixing rate (weight ratio) | Density | Melt properties | | |
|---|---|---|---|---|---|---|---|
| | (a) | (b) | (a)/(b) | (g/cm$^3$) | MFR (g/10 min) | MT (g) | FI (S$^{-1}$) |
| Ex. 7 | a-1 | b-1 | 57/43 | 0.926 | 1.1 | 3.3 | 290 |
| Ex. 8 | a-2 | b-2 | 60/40 | 0.921 | 2.0 | 1.9 | 520 |

Table 4-a   (continued)

| Composition | Component | | Mixing rate (weight ratio) | Density | Melt properties | | |
|---|---|---|---|---|---|---|---|
| | (a) | (b) | (a)/(b) | (g/cm$^3$) | MFR (g/10 min) | MT (g) | FI (S$^{-1}$) |
| Ex. 9 | a-3 | b-3 | 20/80 | 0.922 | 1.4 | 2.6 | 125 |
| Comp. Ex. 6 | a-4 | b-4 | 60/40 | 0.922 | 2.0 | 1.0 | 360 |
| Comp. Ex. 7 | c-1 | | - | 0.922 | 1.9 | 0.9 | 250 |

Table 4-b

| Properties of inner container | | | | |
|---|---|---|---|---|
| | Blocking force (g/cm) | Moldability *1 | Anti-pinhole properties (number of pinholes) | Flex resistance (flexing times) |
| Example 7 | 0 | BB | 0 | > 100000 |
| Example 8 | 0 | CC | 0 | > 100000 |
| Example 9 | 0.17 | BB | 0 | > 100000 |
| Comp. Ex. 6 | 5.6 | DD | 3 | 83000 |
| Comp. Ex. 7 | 4.2 | DD | 7 | 72000 |

*1) Moldability: evaluated by film width at a distance of 50 cm from the die end when a molten resin is allowed to spontaneously sag from T-die.
AA: film width $\geq$ 60 cm
BB: 60 cm > film width $\geq$ 50 cm
CC: 50 cm > film width $\geq$ 40 cm
DD: 40 cm > film width

Examples using polyethylene resin composed of ethylene copolymer composition [II]

Preparation Example 2

Preparation of catalyst component

In 100 liters of toluene, 6.3 kg of silica having been dried at 250 °C for 10 hours was suspended, and the suspension was cooled to 0 °C. Then, 41 liters of a toluene solution of methylaluminoxane (Al = 0.96 mol/l) was dropwise added over a period of 1 hour. During the addition, the temperature of the system was maintained at 0 °C. Subsequently, the reaction was performed at 0 °C for 60 minutes, and the temperature was then raised up to 95 °C over a period of 1.5 hours, followed by performing reaction at this temperature for 4 hours. Thereafter, the system was cooled to 60 °C, and the supernatant liquid was removed by decantation. The solid obtained was washed twice with toluene and resuspended in 125 liters of toluene. To the system, 15 liters of a toluene solution of bis(n-butylcyclopentadienyl) zirconium dichloride (Zr = 42.7 mmol/l) was dropwise added at 30 °C over a period of 30 minutes, to perform reaction at 30 °C for 2 hours. Then, the supernatant liquid was removed, and the remainder was washed twice with hexane to obtain a solid catalyst containing 6.2 mg of zirconium per 1 g of the catalyst.

Preparation of prepolymerized catalyst

To 300 liters of hexane containing 14 mol of triisobutylaluminum, 8.5 kg of the solid catalyst obtained above was added, and prepolymerization of ethylene was carried out at 35 °C for 7 hours. Thus, a prepolymerized catalyst, in which 3 g of polyethylene per 1 g of the solid catalyst was produced by the prepolymerization, was obtained.

Polymerization

In a continuous fluidized bed gas phase polymerization reactor, copolymerization of ethylene and 1-hexene was carried out under the conditions of a total pressure of 18 kg/cm$^2$-G and a polymerization temperature of 80 °C. In this copolymerization, to the system were continuously fed the above-prepared prepolymerized catalyst at a feed rate of 0.15 mmol/hr (in terms of zirconium atom) and triisobutylaluminum at a feed rate of 10 mmol/hr. In order to maintain the gas composition constant during the polymerization, ethylene, 1-hexene, hydrogen and nitrogen were continuously fed to the system (gas composition: 1-hexene/ethylene = 0.020, hydrogen/ethylene = $6.6 \times 10^{-4}$, ethylene concentration = 16 %).

The yield of the ethylene/1-hexene copolymer (d-1) was 5.0 kg/hr. The density was 0.923 g/cm, MFR was 1.1 g/10 min, the maximum peak temperature (Tm) of the endotherm curve measured by DSC was 116.8 °C, the melt tension was 1.5 g, the quantity fraction of the n-decane-soluble component at 23 °C was 0.02 % by weight, the number of the unsaturated bonds was 0.09 per 1,000 carbon atoms and was 0.16 per one molecule of the copolymer, and the B value indicating the 1-hexene distribution in the copolymer chains was 1.02.

Example 10

The ethylene/1-hexene copolymer (d-1) obtained in Preparation Example 2 and a high-pressure low-density polyethylene (e-2) shown in Table 6 were dry blended in a weight ratio of 90/10 (d-1/e-2). To 100 parts by weight of the resulting blend were added 0.05 part by weight of tri(2,4-di-t-butylphenyl)phosphate as a secondary antioxidant, 0.1 part by weight of n-octadecyl-3-(4'-hydroxy-3',5'-di-t-butylphenyl)propionate as a heat stabilizer and 0.05 part by weight of calcium stearate as a hydrochloric acid absorber. Then, the mixture is kneaded at a preset temperature of 180 °C using a twin-screw conical-tapered extruder manufactured by Harque Co., to obtain an ethylene copolymer composition.

The melt properties of the ethylene copolymer composition are set forth in Table 7.

The composition was molded into an inner container for bag in box by the aforementioned molding process. The results of evaluation of the inner container are set forth in Table 7.

Example 11

An ethylene copolymer composition was prepared in the same manner as in Example 10 except that the mixing ratio of the ethylene/1-hexene copolymer (d-1) to the high-pressure low-density polyethylene (e-2) was varied to 75/25 (d-1/e-2). Then, the ethylene copolymer composition was molded into an inner container for bag in box in the same manner as in Example 10.

The melt properties of the ethylene copolymer composition and the results of evaluation of the inner container for bag in box are set forth in Table 7.

Example 12

An ethylene copolymer composition was prepared in the same manner as in Example 10 except that a high-pressure low-density polyethylene (e-1) shown in Table 6 was used in place of the high-pressure low-density polyethylene (e-2). Then, the ethylene copolymer composition was molded into an inner container for bag in box in the same manner as in Example 10.

The melt properties of the ethylene copolymer composition and the results of evaluation of the inner container for bag in box are set forth in Table 7.

Comparative Example 8

An ethylene/1-hexene copolymer (d-7) was prepared in the same manner as in Preparation Example 2 except that bis(n-butylcyclopentadienyl)zirconium dichloride was replaced with a titanium catalyst component described in . Japanese Patent Publication No. 54289/1988 and the comonomer content was adjusted as shown in Table 5.

The properties of the ethylene/1-hexene copolymer (d-7) are set forth in Table 5.

Then, an ethylene copolymer composition was prepared in the same manner as in Example 10 except that the ethylene/1-hexene copolymer (d-7) and the high-pressure low-density polyethylene (e-1) shown in Table 6 were used. Then, the ethylene copolymer composition was molded into an inner container for bag in box in the same manner as in Example 10.

The melt properties of the ethylene copolymer composition and the results of evaluation of the inner container for bag in box are set forth in Table 7.

Comparative Example 9

The ethylene/1-hexene copolymer (d-7) obtained in Comparative Example 8 was molded into an inner container for bag in box in the same manner as in Example 10.

The melt properties of the ethylene/1-hexene copolymer (d-7) and the results of evaluation of the inner container for bag in box are set forth in Table 7.

Preparation Examples 3 - 5

Ethylene/α-olefin copolymers (d-2, d-3 and d-4) were each prepared in the same manner as in Preparation Example 2 except that the kind of the comonomer and the comonomer content were varied to those shown in Table 5.
The properties of the ethylene/α-olefin copolymers (d-2, d-3 and d-4) are set forth in Table 5.

Examples 13 - 15

Ethylene copolymer compositions were each prepared in the same manner as in Example 10 except that the ethylene/α-olefin copolymer (d-2, d-3 or d-4) and the high-pressure low-density polyethylene (e-1) shown in Table 6 were used. Then, the ethylene copolymer compositions were molded into inner containers for bag in box in the same manner as in Example 10.
The melt properties of the ethylene copolymer compositions and the results of evaluation of the inner containers for bag in box are set forth in Table 7.

Preparation Examples 6 & 7

Ethylene/α-olefin copolymers (d-5 and d-6) were each prepared in the same manner as in Preparation Example 2 except that bis(n-butylcyclopentadienyl)zirconium dichloride was replaced with bis(1-methyl-3-n-butylcyclopentadienyl)zirconium dichloride and the comonomer content was adjusted as shown in Table 5.
The properties of the ethylene/α-olefin copolymers (d-5 and d-6) are set forth in Table 5.

Example 16 & 17

Ethylene copolymer compositions were each prepared in the same manner as in Example 10 except that the ethylene/α-olefin copolymer (d-5 or d-6) and the high-pressure low-density polyethylene (e-1) shown in Table 6 were used. Then, the ethylene copolymer compositions were each molded into an inner container for bag in box in the same manner as in Example 10.
The melt properties of the ethylene copolymer compositions and the results of evaluation of the inner containers for bag in box are set forth in Table 7.

Comparative Example 10

An ethylene copolymer composition was prepared in the same manner as in Example 10 except that the ethylene/1-hexene copolymer (d-1) obtained in Preparation Example 2 and a high-pressure low-density polyethylene (e-3) shown in Table 6 were used. Then, the ethylene copolymer composition was molded into an inner container for bag in box in the same manner as in Example 10.
The melt properties of the ethylene copolymer composition and the results of evaluation of the inner container for bag in box are set forth in Table 7.

Comparative Example 11

An ethylene copolymer composition was prepared in the same manner as in Example 10 except that the ethylene/1-hexene copolymer (d-1) obtained in Preparation Example 2 and the high-pressure low-density polyethylene (e-2) shown in Table 6 were melt blended in a weight ratio of 40/60 (d-1/e-2). Then, the ethylene copolymer composition was molded into an inner container for bag in box in the same manner as in Example 10.
The melt properties of the ethylene copolymer composition and the results of evaluation of the inner container for bag in box are set forth in Table 7.

Comparative Example 12

An inner container for bag in box was formed in the same manner as in Example 10 except that only the high-pressure low-density polyethylene (e-2) shown in Table 6 was used in place of the ethylene copolymer composition.
The melt properties of the ethylene copolymer (e-2) and the results of evaluation of the inner container for bag in box are set forth in Table 7.

Table 5 [Ethylene copolymer]

| Copolymer | Comonomer | Comonomer content (mol%) | Density (g/cm$^3$) | MFR (g/10 min) |
|---|---|---|---|---|
| d-1 | 1-hexene | 2.8 | 0.923 | 1.1 |
| d-2 | 1-hexene | 3.0 | 0.920 | 2.4 |
| d-3 | 1-hexene | 2.6 | 0.920 | 2.3 |
| d-4 | 4-methyl-pentene | 2.4 | 0.920 | 2.0 |
| d-5 | 1-hexene | 2.8 | 0.922 | 2.0 |
| d-6 | 1-hexene | 1.9 | 0.927 | 0.9 |
| d-7 | 1-hexene | 3.6 | 0.922 | 1.0 |

Table 5 [Ethylene copolymer] (continued)

| Copolymer | Tm (°C) | Value of formula (1) *1 | MT (g) | Value of formula (2) *2 |
|---|---|---|---|---|
| d-1 | 116.8 | 119.2 | 1.5 | 2.0 |
| d-2 | 114.8 | 118.0 | 0.7 | 1.1 |
| d-3 | 115.0 | 118.0 | 0.7 | 1.1 |
| d-4 | 114.7 | 118.0 | 0.8 | 1.2 |
| d-5 | 115.0 | 118.8 | 0.8 | 1.2 |
| d-6 | 115.0 | 120.8 | 1.8 | 2.4 |
| d-7 | 123.2 | 118.8 | 1.8 | 2.2 |

Table 5 [Ethylene copolymer] (continued)

| Copolymer | FI $(S^{-1})$ | Value of formula (3) *3 | Quantity fraction of n-decane-soluble component (W) (wt%) | Unsaturated bond *4 |
|---|---|---|---|---|
| d-1 | 67 | 1.19 | 0.02 | 0.09 |
| d-2 | 150 | 1.57 | 0.25 | 0.07 |
| d-3 | 110 | 1.57 | 0.08 | 0.08 |
| d-4 | 100 | 1.57 | 0.19 | 0.12 |
| d-5 | 100 | 1.30 | 0.20 | 0.07 |
| d-6 | 58 | 1.01 | 0.14 | 0.06 |
| d-7 | 190 | 1.30 | 7.9 | 0.25 |

*1) $Tm < 400 \times d - 250$ ... formula (1)
*2) $MT \leq 2.2 \times MFR^{-0.84}$ ... formula (2)
*3) MFR $\leq$ 10 g/10 min:
$W < 80 \times \exp(-100(d-0.88)) + 0.1$ ... Formula (3)
MFR > 10 g/10 min:
$W < 80 \times (MFR-9)^{0.26} \times \exp(-100(d-0.88)) + 0.1$
...Formula (3)
*4) Number of unsaturated bondes per 1,000 carbon atoms in ethylene/a-olefin copolymer
*5) Copolymers of d-1, d-2, d-3, d-4, d-5 and d-6:
Zr catalyst, gas phase polymerization
Copolymers of d-7:
Ti catalyst, gas phase polymerization

Table 6

| | MFR (g/10 min) | Mw/Mn | Value of formula (1) *1 | Value of formula (2) *2 | Density (g/cm$^3$) |
|---|---|---|---|---|---|
| High-pressure radical polymerization-processed low-density polyethylene | | | | | |
| e-1 | 5.2 | 9.4 | 17.8 | 4.3 | 0.919 |
| e-2 | 0.50 | 4.4 | 18.2 | <0 | 0.924 |
| e-3 | 66 | 8.9 | 26.1 | 12.4 | 0.915 |

*1) Mw/Mn $\leq$ 7.5 x log (MFR) + 12.5    ... formula (1)
*2) Mw/Mn $\geq$ 7.5 x log (MFR) - 1.2    ... formula (2)

Table 7-a

| Composition | Component | | Mixing rate (weight ratio) (d)/(e) | Density (g/cm$^3$) | Melt properties | | |
|---|---|---|---|---|---|---|---|
| | (d) | (e) | | | MRF (g/10 min) | MT (g) | FI (S$^{-1}$) |
| Ex. 10 | d-1 | e-2 | 90/10 | 0.923 | 0.9 | 4.3 | 90 |
| Ex. 11 | d-1 | e-2 | 75/25 | 0.923 | 0.8 | 6.8 | 128 |
| Ex. 12 | d-1 | e-1 | 90/10 | 0.922 | 1.1 | 3.6 | 100 |
| Comp. Ex. 8 | d-7 | e-1 | 90/10 | 0.922 | 1.0 | 4.0 | 245 |
| Comp. Ex. 9 | d-7 | | 100/0 | 0.922 | 1.0 | 1.8 | 190 |
| Ex. 13 | d-2 | e-1 | 90/10 | 0.920 | 2.4 | 1.8 | 288 |
| Ex. 14 | d-3 | e-1 | 90/10 | 0.920 | 2.4 | 1.0 | 150 |
| Ex. 15 | d-4 | e-1 | 90/10 | 0.920 | 2.0 | 2.1 | 135 |
| Ex. 16 | d-5 | e-1 | 90/10 | 0.922 | 2.0 | 2.2 | 130 |
| Ex. 17 | d-6 | e-1 | 90/10 | 0.926 | 0.9 | 4.5 | 85 |
| Comp. Ex. 10 | d-1 | e-3 | 90/10 | 0.922 | 1.0 | 1.0 | 130 |
| Comp. Ex. 11 | d-1 | e-2 | 40/60 | 0.924 | 0.7 | 6.0 | 135 |
| Comp. Ex. 12 | | e-2 | 0/100 | 0.924 | 0.5 | 8.5 | - |

Table 7-b

| Properties of inner container | | | | |
|---|---|---|---|---|
| | Blocking force (g/cm) | Moldability' *1 | Anti-pinhole properties (number of pinholes) | Flex resistance (flexing times) |
| Example 10 | 0.19 | AA | 0 | > 100000 |
| Example 11 | 0.38 | AA | 0 | > 100000 |
| Example 12 | 0.24 | BB | 0 | > 100000 |
| Comp. Ex. 8 | 4.7 | AA | 1 | 62000 |
| Comp. Ex. 9 | 4.8 | CC | 0 | 75000 |
| Ex. 13 | 0.26 | BB | 0 | > 100000 |
| Ex. 14 | 0.42 | BB | 0 | > 100000 |
| Ex. 15 | 0.11 | BB | 0 | > 100000 |
| Ex. 16 | 0.20 | BB | 0 | > 100000 |
| Ex. 17 | 0 | AA | 0 | > 100000 |
| Comp. Ex. 10 | 0.12 | DD | 3 | 85000 |
| Comp. Ex. 11 | 0.41 | AA | 15 | 37000 |
| Comp. Ex. 12 | 0.53 | AA | 21 | 9800 |

*1) Moldability: evaluated by film width at a distance of 50 cm from the die end when a molten resin is allowed to spontaneously sag from T-die.
AA: film width $\geq$ 60 cm
BB: 60 cm > film width $\geq$ 50 cm
CC: 50 cm > film width $\geq$ 40 cm
DD: 40 cm > film width

### Preparation Example 8

### Preparation of catalyst component

In 154 liters of toluene, 10.0 kg of silica having been dried at 250 °C for 10 hours was suspended, and the suspension was cooled to 0 °C. Then, 57.5 liters of a toluene solution of methylaluminoxane (Al = 1.33 mol/l) was dropwise added over a period of 1 hour. During the addition, the temperature of the system was maintained at 0 °C. Subsequently, the reaction was performed at 0 °C for 30 minutes, and the temperature was then raised up to 95 °C over a period of 1.5 hours, followed by performing reaction at this temperature for 20 hours. Thereafter, the system was cooled to 60 °C, and the supernatant liquid was removed by decantation. The solid obtained was washed twice with toluene and resuspended in 100 liters of toluene. To the system, 16.8 liters of a toluene solution of bis(1-methyl-3-n-butylcyclopentadienyl)zirconium dichloride (Zr = 27.0 mmol/l) was dropwise added at 80 °C over a period of 30 minutes, to perform reaction at 80 °C for 2 hours. Then, the supernatant liquid was removed, and the remainder was washed twice with hexane to obtain a solid catalyst containing 3.5 mg of zirconium per 1 g of the catalyst.

### Preparation of prepolymerized catalyst

To 87 liters of hexane containing 2.5 mol of triisobutylaluminum, 870 g of the solid catalyst obtained above and 260 g of 1-hexene were added, and prepolymerization of ethylene was carried out at 35 °C for 5 hours. Thus, a prepolymerized catalyst, in which 10 g of polyethylene per 1 g of the solid catalyst was produced by the prepolymerization, was obtained.

### Polymerization

In a continuous fluidized bed gas phase polymerization reactor, copolymerization of ethylene and 1-hexene was carried out under the conditions of a total pressure of 18 kg/cm$^2$-G and a polymerization temperature of 75 °C. In this copolymerization, to the system were continuously fed the above-prepared prepolymerized catalyst at a feed rate of 0.15 mmol/hr (in terms of zirconium atom) and triisobutylaluminum at a feed rate of 10 mmol/hr. In order to maintain the gas composition constant during the polymerization, ethylene, 1-hexene, hydrogen and nitrogen were continuously fed to the system (gas composition: 1-hexene/ethylene = 0.034, hydrogen/ethylene = $1.7 \times 10^{-4}$, ethylene concentration = 20 %).

The yield of the ethylene/1-hexene copolymer (f-1) was 5.8 kg/hr. The density was 0.908 g/cm, MFR was 0.77 g/10 min, the maximum peak temperature (Tm) of the endotherm curve measured by DSC was 93.6 °C, the quantity fraction of the n-decane-soluble component at 23 °C was 0.51 % by weight, and the number of the unsaturated bonds was 0.08 per 1,000 carbon atoms and was 0.70 per one molecule of the copolymer.

### Example 18

The ethylene/1-hexene copolymer (f-1) (density: 0.908 g/cm$^3$) obtained in Preparation Example 8 and an ethylene/1-hexene copolymer (g-1) prepared in the same manner as in Preparation Example 8 except that the comonomer content was adjusted as shown in Table 8 were melt kneaded in a weight ratio of 60/40 (f-1/g-1), to obtain an ethylene/1-hexene copolymer composition (L-1).

The properties of the ethylene/1-hexene copolymer composition (L-1) are set forth in Table 9.

The ethylene/1-hexene copolymer composition (L-1) and a high-pressure low-density polyethylene (H-1) shown in Table 10 were dry blended in a weight ratio of 90/10 (L-1/H-1). To 100 parts by weight of the resulting blend were added 0.05 part by weight of tri(2,4-di-t-butylphenyl)phosphate as a secondary antioxidant, 0.1 part by weight of n-octadecyl-3-(4'-hydroxy-3',5'-di-t-butylphenyl)propionate as a heat stabilizer and 0.05 part by weight of calcium stearate as a hydrochloric acid absorber. Then, the mixture is kneaded at a preset temperature of 180 °C using a twin-screw conical-tapered extruder manufactured by Harque Co., to obtain an ethylene copolymer composition.

The melt properties of the ethylene copolymer composition are set forth in Table 11.

The composition was molded into an inner container for bag in box by the aforementioned molding process. The results of evaluation of the inner container for bag in box are set forth in Table 11.

### Example 19

An ethylene/1-hexene copolymer (f-2) (density: 0.909 g/cm$^3$) and an ethylene/1-hexene copolymer (g-2) (density: 0.943 g/cm$^3$), each being prepared in the same manner as in Preparation Example 8 except that the comonomer content was adjusted as shown in Table 8, were melt kneaded in a weight ratio of 70/30 (f-2/g-2), to obtain an ethylene/1-hexene copolymer composition (L-2).

The properties of the ethylene/1-hexene copolymer composition (L-2) are set forth in Table 9.

An ethylene copolymer composition was prepared in the same manner as in Example 18 except that the ethylene/1-hexene copolymer composition (L-2) was used. Then, the composition was molded into an inner container for bag in box in the same manner as in Example 18.

The results of evaluation of the inner container are set forth in Table 11.

Example 20

An ethylene/1-hexene copolymer (f-3) (density: 0.910 g/cm$^3$) and an ethylene/1-hexene copolymer (g-3) (density: 0.946 g/cm$^3$), each being prepared in the same manner as in Preparation Example 8 except that the comonomer content was adjusted as shown in Table 8, were melt kneaded in a weight ratio of 60/40 (f-3/g-3), to obtain an ethylene/1-hexene copolymer composition (L-3).

The properties of the ethylene/1-hexene copolymer composition (L-3) are set forth in Table 9.

An ethylene copolymer composition was prepared in the same manner as in Example 18 except that the ethylene/1-hexene copolymer composition (L-3) was used in place of the ethylene/1-hexene copolymer composition (L-1). Then, the composition was molded into an inner container for bag in box in the same manner as in Example 18.

The results of evaluation of the inner container are set forth in Table 11.

Comparative Example 13

An ethylene/1-hexene copolymer (f-4) (density: 0.915 g/cm$^3$) and an ethylene/1-hexene copolymer (g-4) ((density: 0.933 g/cm$^3$), each being prepared in the same manner as in Preparation Example 8 except that bis(1-methyl-3-n-butylcyclopentadienyl)zirconium dichloride was replaced with a titanium catalyst component described in Japanese Patent Publication No. 54289/1988, the methylaluminoxane was replaced with triethylaluminum and the gas composition was varied to that shown in Table 8, were melt kneaded in a weight ratio of 60/40 (f-4/g-4), to obtain an ethylene/1-hexene copolymer composition (L-4).

The properties of the ethylene/1-hexene copolymer composition (L-4) are set forth in Table 9.

An ethylene copolymer composition was prepared in the same manner as in Example 18 except that the ethylene/1-hexene copolymer composition (L-4) was used in place of the ethylene/1-hexene copolymer composition (L-1). Then, the composition was molded into an inner container for bag in. box in the same manner as in Example 18.

The results of evaluation of the inner container are set forth in Table 11.

From Table 11, it has been confirmed that the ethylene copolymer composition obtained in Comparative Example 13 shows lower moldability, as compared with the ethylene copolymer composition of Example 18 having almost the same density and MFR.

Comparative Example 14

The ethylene/1-hexene copolymer composition (L-4) obtained in Comparative Example 13 was molded into an inner container for bag in box in the same manner as in Example 18.

The results of evaluation of the inner container are set forth in Table 11.

Example 21

An ethylene copolymer composition was prepared in the same manner as in Example 18 except that the ethylene/1-hexene copolymer composition (L-1) prepared in Example 18 and the high-pressure low-density polyethylene (H-1) used in Example 18 were melt kneaded in a weight ratio of 70/30 (L-1/H-1). Then, the composition was molded into an inner container for bag in box in the same manner as in Example 18.

The properties of the ethylene copolymer composition and the results of evaluation of the inner container for bag in box are set forth in Table 11.

Comparative Example 15

An ethylene copolymer composition was prepared in the same manner as in Example 18 except that the ethylene/1-hexene copolymer composition (L-1) prepared in Example 18 and the high-pressure low-density polyethylene (H-1) used in Example 18 were melt kneaded in a weight ratio of 50/50 (L-1/H-1). Then, the composition was molded into an inner container for bag in box in the same manner as in Example 18.

The properties of the ethylene copolymer composition and the results of evaluation of the inner container for bag in box are set forth in Table 11.

From Table 11, it has been confirmed that Comparative Example 15 shows improved moldability but has poor flex resistance.

Comparative Example 16

An ethylene copolymer composition was prepared in the same manner as in Example 18 except that only the high-pressure low-density polyethylene (H-1) was used. Then, the composition was molded into an inner container for bag in box in the same manner as in Example 18.

The results of evaluation of the inner container are set forth in Table 11.

From Table 11, it has been confirmed that Comparative Example 16 has good moldability but shows extremely bad anti-pinhole properties and flex resistance.

Table 8 [Ethylene copolymer]

| Copolymer | Comonomer | Comonomer content (mol%) | Density (g/cm$^3$) | MFR (g/10 min) | [η] (dl/g) |
|---|---|---|---|---|---|
| f-1 | 1-hexene | 4.8 | 0.908 | 0.77 | 1.94 |
| f-2 | 1-hexene | 4.7 | 0.909 | 0.46 | 2.14 |
| f-3 | 1-hexene | 4.8 | 0.910 | 0.60 | 2.03 |
| f-4 | 1-hexene | 6.1 | 0.915 | 0.65 | 2.00 |
| q-1 | 1-hexene | 1.4 | 0.938 | 13.0 | 1.12 |
| q-2 | 1-hexene | 1.0 | 0.943 | 229 | 0.64 |
| q-3 | 1-hexene | 1.0 | 0.946 | 240 | 0.64 |
| q-4 | 1-hexene | 2.8 | 0.933 | 19.2 | 1.04 |

Table 8 [Ethylene copolymer] (continued)

| Copolymer | Tm (°C) | Value of formula (1) *1 | MT (g) | Value of formula (2) *2 | FI (S$^{-1}$) |
|---|---|---|---|---|---|
| f-1 | 93.6 | 113.2 | 2.4 | 2.7 | 50 |
| f-2 | 97.4 | 113.6 | 3.8 | 4.2 | 30 |
| f-3 | 96.8 | 114.0 | 2.7 | 3.4 | 33 |
| f-4 | 120.3 | 116.0 | 2.8 | 3.2 | 140 |
| q-1 | 118.2 | 125.2 | 0.1> | - | 980 |
| q-2 | 118.9 | 127.2 | 0.1> | - | 17760 |
| q-3 | 119.5 | 128.4 | 0.1> | - | 22300 |
| q-4 | 128.0 | 123.2 | 0.1> | - | 1480 |

Table 8 [Ethylene copolymer] (continued)

| Copolymer | Value of formula (3) *3 | Quantity fraction of n-decane-soluble component (W) (wt%) | Unsaturated bond *4 |
|---|---|---|---|
| f-1 | 5.0 | 0.51 | 0.08 |
| f-2 | 4.5 | 0.48 | 0.05 |
| f-3 | 4.1 | 0.49 | 0.09 |
| f-4 | 2.5 | 13.5 | 0.23 |
| g-1 | 0.45 | 0.32 | 0.15 |
| g-2 | 0.70 | 0.45 | 0.09 |
| g-3 | 0.55 | 0.40 | 0.10 |
| g-4 | 0.83 | 2.20 | 0.28 |

*1) $Tm < 400 \times d - 250$ ... formula (1)

*2) $MT \leq 2.2 \times MFR^{-0.84}$ ... formula (2)

*3) MFR ≤ 10 g/10 min:
$W < 80 \times \exp(-100(d-0.88)) + 0.1$ ... Formula (3)
MFR > 10 g/10 min:
$W < 80 \times (MFR-9)^{0.26} \times \exp(-100(d-0.88)) + 0.1$
...Formula (3)

*4) Number of unsaturated bondes per 1,000 carbon atoms in ethylene/α-olefin copolymer

*5) Copolymers of f-1, f-2, f-3, g-1, g-2 and g-3:
Zr catalyst, gas phase polymerization
Copolymers of f-4 and g-4:
Ti catalyst, gas phase polymerization

Table 9

| Composition | Component | | Mixing ratio (weight ratio) (f)/(g) | Density (g/cm³) | Melt properties | | |
|---|---|---|---|---|---|---|---|
| | (f) | (g) | | | MFR (g/10 min) | MT (g) | FI (S⁻¹) |
| L-1 | f-1 | g-1 | 60/40 | 0.921 | 2.0 | 1.0 | 170 |
| L-2 | f-2 | g-2 | 70/30 | 0.920 | 1.3 | 1.6 | 150 |
| L-3 | f-3 | g-3 | 60/40 | 0.924 | 2.3 | 0.8 | 360 |

Table 9   (continued)

| Composition | Component | | Mixing ratio (weight ratio) (f)/(g) | Density (g/cm$^3$) | Melt properties | | |
|---|---|---|---|---|---|---|---|
| | (f) | (g) | | | MFR (g/10 min) | MT (g) | FI (S$^{-1}$) |
| L-4 | f-4 | g-4 | 60/40 | 0.922 | 2.0 | 1.0 | 360 |

Table 10

| High-pressure radical polymerization-processed low-density polyethylene | | | | | |
|---|---|---|---|---|---|
| | MFR (g/10 min) | Mw/Mn | Value of formula (1) *1 | Value of formula (2) *2 | Density (g/cm$^3$) |
| H-1 | 0.50 | 4.4 | 10.2 | <0 | 0.924 |

*1) Mw/Mn ≤ 7.5 x log (MFR) + 12.5          ... formula (1)

*2) Mw/Mn ≥ 7.5 x log (MFR) - 1.2          ... formula (2)

Table 11-a

| Composition | Component | | Mixing rate (weight ratio) (L)/(H) | Density (g/cm$^3$) | Melt properties | | |
|---|---|---|---|---|---|---|---|
| | (L) | (H) | | | MFR (g/10 min) | MT (g) | FI (S$^{-1}$) |
| Ex. 18 | L-1 | H-1 | 90/10 | 0.921 | 1.8 | 2.5 | 190 |
| Ex. 19 | L-2 | H-1 | 90/10 | 0.920 | 1.2 | 3.2 | 170 |
| Ex. 20 | L-3 | H-1 | 90/10 | 0.924 | 2.0 | 2.1 | 380 |
| Comp. Ex. 13 | L-4 | H-1 | 90/10 | 0.922 | 1.8 | 2.3 | 370 |
| Comp. Ex. 14 | L-4 | | 100/0 | 0.922 | 2.0 | 1.0 | 360 |
| Ex. 21 | L-1 | H-1 | 70/30 | 0.922 | 1.3 | 2.8 | 270 |
| Comp. Ex. 15 | L-1 | H-1 | 50/50 | 0.922 | 1.0 | 3.5 | 390 |
| Comp. Ex. 16 | | H-1 | 0/100 | 0.924 | 0.5 | 5.1 | - |

Table 11-b

| Properties of inner container | | | | |
|---|---|---|---|---|
| | Blocking force (g/cm) | Moldability *1 | Anti-pinhole properties (number of pinholes) | Flex resistance (flexing times) |
| Ex. 18 | 0 | BB | 0 | > 100000 |
| Ex. 19 | 0 | AA | 0 | > 100000 |
| Ex. 20 | 0 | BB | 0 | > 100000 |
| Comp. Ex. 13 | 6.7 | BB | 0 | 98000 |
| Comp. Ex. 14 | 5.6 | DD | 0 | > 100000 |
| Ex. 21 | 0 | AA | 3 | 85000 |
| Comp. Ex. 15 | 0 | AA | 15 | 12000 |
| Comp. Ex. 16 | 0.1 | AA | 29 | 5500 |

*1) Moldability: evaluated by film width at a distance of 50 cm from the die end when a molten resin is allowed to spontaneously sag from T-die.
   AA: film width ≥ 60 cm
   BB: 60 cm > film width ≥ 50 cm
   CC: 50 cm > film width ≥ 40 cm
   DD: 40 cm > film width

**Claims**

1. Use as an inner container for a bag in box of a polyethylene resin container which is obtainable from a polyethylene resin comprising an ethylene copolymer [A] having the following properties:

   (i) the copolymer [A] is a copolymer of ethylene and an $\alpha$-olefin of 3 to 20 carbon atoms;
   (ii) the density is 0.880 to 0.960 g/cm$^3$;
   (iii) the melt flow rate (MFR, ASTM D 1238-65T, 190°C, load of 2.16 kg) is 0.01 to 20 g/10 min; and
   (iv) the temperature (Tm (°C)) at the maximum peak position of the endothermic curve measured by a differential scanning calorimeter (DSC) and the density (d (g/cm$^3$)) satisfy the relation:

$$Tm < 400 \times d - 250;$$

   (v) copolymer [A] has not more than 0.5 unsaturated bonds per 1,000 carbon atoms, and less than 1 per one molecule of the copolymer;
   (vi) the quantity fraction (W (% by weight)) of the n-decane-soluble component of copolymer [A] at room temperature and the density (d, (g/cm$^3$)) satisfy the following relation:
       in the case of MFR $\leq$ 10 g/min:

$$W < 80 \times \exp(-100(d-0.88)) + 0.1;$$

       in the case of MFR > 10 g/min:

$$W < 80 \times (MFR-9)^{0.35} \times \exp(-100(d-0.88)) + 0.1;$$

   (vii) the flow index (FI (l/sec)) of copolymer [A] defined as a shear rate given when the stress of the molten polymer at 190°C reaches $2.4 \times 10^6$ dyne/cm$^2$ and the melt flow rate (MFR (10 min)) satisfy the following relation:

$$FI > 75 \times MFR;$$

   (viii) the melt tension (MT (g)) at 190°C and the melt flow rate (MFR (g/10 min)) satisfy the following relation:

$$MT > 2.0 \times MFR^{-0.65};$$

   and wherein the wall thereof is formed from a film having a thickness of from 50 to 1000 µm and having the following properties:

   (i) the blocking force is less than 1.0 g/cm;
   (ii) the number of pinholes produced in an area of 20.5 cm x 28.0 cm after torsion is repeatedly applied to the film 2,000 times by means of a Gelbo flex tester is not more than 2; and
   (iii) the number of flexings, as measured in accordance with JIS P-8115, is not less than 90,000.

2. Use according to claim 1 wherein the ethylene copolymer [A] is obtainable by copolymerising ethylene and an $\alpha$-olefin of 3 to 20 carbon atoms in the presence of a metallocene catalyst.

3. Use according to claim 1 or 2 wherein the polyethylene resin comprises 99 to 65% by weight of the ethylene copolymer [A] and 1 to 35% by weight of a high-pressure low-density polyethylene [D].

4. A reusable package suitable for storing and transporting fluent material, comprising:

   an outer, rigid container;
   and

a soft, thin-wall, flexible inner container positioned within the outer container which is capable of receiving and storing therein fluent material and which may be repeatedly filled with fluent material and emptied and folded upon itself without failure, said inner container being as defined in any one of the preceding claims.

5. A method for repeatedly transporting fluent material using the same container, said method comprising

(a) providing at a first location a folded thin walled flexible inner container according to any one of claims 1 to 4;
(b) unfolding the inner container and placing the inner container within a substantially rigid transportable outer container to thereby form a bag-in-box container;
(c) filling the inner container with fluent material and securing the inner and outer containers in closed condition to prevent spillage of the fluent material stored within the inner container of the bag-in-box container;
(d) transporting the filled bag-in-box container to a second location remote from the first location;
(e) opening the outer and inner containers and emptying the fluent material from the inner container for use at said second location;
(f) removing the emptied inner container from the outer container;
(g) folding the inner container upon itself and transporting the folded inner container from the second location to the first location or to a third location; and
(h) repeating steps (b) - (g);

whereby steps (b) - (g) may be repeated without replacing the flexible inner container.

**Patentansprüche**

1. Verwendung eines Behälters aus Polyethylenharz als inneren Behälter (Innenbeutel) für eine "bag-in-box"-Verpackung, der erhältlich ist aus einem Polyethylenharz, umfassend ein Ethylen-Copolymer [A] mit den folgenden Eigenschaften:

(i) das Copolymer [A] ist ein Copolymer aus Ethylen und einem $\alpha$-Olefin mit 3 bis 20 Kohlenstoffatomen;
(ii) die Dichte beträgt 0,880 bis 0,960 g/cm$^3$;
(iii) die Fließfähigkeit (MFR, ASTM D 1238-65T, 190°C, Last 2,16 kg) beträgt 0,01 bis 20 g/10 min und
(iv) die Temperatur (Tm (°C)) an dem Punkt des maximalen Peaks der endothermen Kurve, gemessen mit einem Differential-Scanner-Kalorimeter (DSC) und die Dichte (d (g/cm$^3$)) entsprechen der Beziehung

$$Tm < 400 \times d - 250;$$

(v) das Copolymer [A] enthält nicht mehr als 0,5 ungesättigte Bindungen je 1 000 Kohlenstoffatome und weniger als 1 je Molekül des Copolymers;
(vi) der Mengenanteil (W (Gew.%)) der in n-Decan löslichen Komponente des Copolymers [A] bei Raumtemperatur und die Dichte (d (g/cm$^3$)) entsprechen der Beziehung
im Falle von MFR $\leq$ 10 g/10 min:

$$W < 80 \times exp(-100(d-0,88)) + 0,1;$$

im Falle von MFR > 10 g/10 min:

$$W < 80 \times (MFR-9)^{0,35} \times exp(-100(d-0,88)) + 0,1;$$

(vii) der Fließindex (FI (l/s)) des Copolymers [A] definiert als Scherrate, die gegeben ist, wenn die Spannung des geschmolzenen Polymers bei 190°C 2,4 x 10$^6$ Dyn/cm$^3$ erreicht und die Fließfähigkeit (MFR (10 min)) entsprechen der Beziehung

$$FI > 75 \times MFR;$$

(viii) die Schmelzspannung (MT (g)) bei 190°C und die Fließfähigkeit (MFR (g/10 min)) entsprechen der Beziehung

$$MT > 2,0 \times MFR^{-0,65},$$

und wobei die Wand aus einer Folie mit einer Dicke von 50 bis 100 µm gebildet ist und die folgenden Eigenschaften hat:

(i) die Blockierungskraft beträgt weniger als 1,0 g/cm;
(ii) die Anzahl der nadelförmigen Lunker in einem Bereich 20,5 cm x 28,0 cm beträgt nach wiederholter, 2 000-facher, Drehbeanspruchung der Folie mit Hilfe eines Gelbo flex Testers nicht mehr als 2 und
(iii) die Anzahl von Faltungen, gemessen nach JIS P-8115, beträgt nicht weniger als 90 000.

2. Verwendung nach Anspruch 1, wobei das Ethylen-Copolymer erhältlich ist durch Copolymerisieren von Ethylen und einem α-Olefin mit 3 bis 20 Kohlenstoffatomen in Gegenwart eines Metallocen-Katalysators.

3. Verwendung nach Anspruch 1 oder 2, wobei das Polyethylenharz 99 bis 65 Gew.% des Ethylen-Copolymers [A] und 1 bis 35 Gew.% eines Hochdruck-Polyethylens niederer Dichte [D] umfaßt.

4. Wiederverwendbare Verpackung, die geeignet ist zum Lagern und Transportieren von flüssigem Material, umfassend:

einen äußeren starren Behälter und

eine weichen, dünnwandigen inneren Behälter, der sich in dem äußeren Behälter befindet, und der in der Lage ist, flüssiges Material darin zu aufzunehmen und zu lagern, und der wiederholt mit flüssigem Material gefüllt und entleert und ohne Schaden gefaltet werden kann, wobei der innere Behälter ein solcher ist, wie in einem der vorangehenden Ansprüche definiert.

5. Verfahren zum wiederholten Transportieren von flüssigem Material unter Verwendung des selben Behälter, wobei das Verfahren umfaßt:

(a) Bereitstellen eines gefalteten dünnwandigen flexiblen inneren Behälters nach einem der Ansprüche 1 bis 4 an einer Stelle,
(b) Entfalten des inneren Behälters und Einsetzen des inneren Behälters in einen im wesentlichen starren transportfähigen äußeren Behälter, um einen "bag-in-box"-Behälter zu erzeugen;
(c) Füllen des inneren Behälters mit flüssigem Material und Sichern des inneren und äußeren Behälters in geschlossenem Zustand, um ein Verspritzen des flüssigen Materials zu verhindern, das in dem inneren Behälter des "bag-in-box"-Behälters gelagert wird;
(d) Transportieren des gefüllten "bag-in-box"-Behälters zu einer zweiten Stelle, die von der ersten Stelle entfernt ist;
(e) Öffnen des äußeren und inneren Behälters und entleeren des flüssigen Materials aus dem inneren Behälter zur Verwendung an der zweiten Stelle;
(f) Entfernen des entleerten inneren Behälters aus dem äußeren Behälter;
(g) Falten des inneren Behälters und Transportieren des gefalteten inneren Behälters von der zweiten Stelle zu der ersten Stelle oder einer dritten Stelle und
(h) Wiederholen der Schritte (b) - (g);

wobei die der Schritte (b) - (g) wiederholt werden können, ohne daß der flexible innere Behälter ersetzt werden muß.

## Revendications

1. Utilisation comme récipient intérieur pour un emballage de type caisse-outre, d'un récipient en résine polyéthylène que l'on peut obtenir à partir d'une résine polyéthylène comprenant un copolymère d'éthylène [A] qui présente les propriétés suivantes :

(i) le copolymère [A] est un copolymère d'éthylène et d'une α-oléfine comportant de 3 à 20 atomes de carbone ;

(ii) la masse volumique est comprise entre 0,880 et 0,960 g/cm$^3$ ;

(iii) l'indice de fluidité à chaud (IFC, ASTM D 1238-65T, 190 °C, charge de 2,16 kg) est compris entre de 0,01 et 20 g/10 min. ; et

(iv) la température (Tm (°C)) correspondant au pic maximum de la courbe endotherme mesurée par analyse calorimétrique différentielle (DSC), et la masse volumique ($m_v$ (g/cm$^3$)) satisfont à la relation :

$$Tm < 400 \times m_v - 250 \; ;$$

(v) le copolymère [A] ne comporte pas plus de 0,5 liaison insaturée pour 1 000 atomes de carbone, et en comporte moins d'une par molécule de copolymère ;

(vi) la fraction quantitative (P (% en poids)) du composant soluble dans le n-décane du copolymère [A] à température ambiante, et la masse volumique ($m_v$ (g/cm$^3$)) satisfont à la relation suivante :

dans le cas où IFC ≤ 10 g/min. :

$$P < 80 \times \exp(-100(m_v - 0,88)) + 0,1 \; ;$$

dans le cas où IFC > 10 g/min. :

$$P < 80 \times (IFC - 9)^{0,35} \times \exp(-100(m_v - 0,88)) + 0,1 \; ;$$

(vii) le débit (D (l/s)) du copolymère [A] défini pour une vitesse de cisaillement donnée quand la contrainte du polymère fondu à 190 °C atteint 2,4 x 10$^6$ dyne/cm$^2$, et l'indice de fluidité à chaud (IFC (g/10 min)) satisfont à la relation suivante :

$$D > 75 \times IFC \; ;$$

(viii) la tension à l'état fondu (TF (g)) à 190 °C et l'indice de fluidité à chaud (IFC (g/10 min)) satisfont à la relation suivante :

$$TF > 2,0 \times IFC^{-0,65} \; ;$$

et dans laquelle la paroi de ce dernier est formée à partir d'un film présentant une épaisseur de 50 à 1000 μm et présentant les propriétés suivantes :

(i) la force de blocage est inférieure à 1,0 g/cm ;

(ii) le nombre de piqûres produites sur une surface de 20,5 cm x 28,0 cm après torsion est appliqué de manière répétée sur le film, 2000 fois au moyen d'un dispositif d'essai Gelbo flex, et n'est pas supérieur à 2 ; et

(iii) le nombre de flexion, tel que mesuré selon la norme JIS P-8115, n'est pas inférieur à 90 000.

2. Utilisation selon la revendication 1, dans laquelle on peut obtenir le copolymère d'éthylène [A] par copolymérisation d'éthylène et d'une α-oléfine comportant de 3 à 20 atomes de carbone, en présence d'un catalyseur métallocène.

3. Utilisation selon la revendication 1 ou 2, dans laquelle la résine polyéthylène comprend 99 à 65 % en poids du copolymère d'éthylène [A] et 1 à 35 % en poids d'un polyéthylène basse densité, haute pression [D].

4. Emballage réutilisable, approprié pour le stockage et le transport de matériau fluide, comprenant :

un récipient rigide extérieur,

et

un récipient intérieur flexible, souple, à paroi mince, positionné à l'intérieur du récipient extérieur qui est capable de recevoir et de stocker en son sein un matériau fluide et que l'on peut remplir de manière répétée avec un matériau fluide et vider et plier sur lui-même sans cassure, ledit récipient intérieur étant tel que défini dans l'une quelconque des revendications précédentes.

**5.** Procédé pour transporter de manière répétée un matériau fluide, en utilisant le même récipient, ledit procédé comprenant :

(a) le fait de fournir, dans un premier lieu, un récipient intérieur flexible, à paroi mince, et plié selon l'une quelconque des revendications 1 à 4 ;
(b) le fait de déplier le récipient intérieur et de le placer dans un récipient extérieur transportable, substantiellement rigide, ce qui permet la formation d'un récipient de type caisse-outre ;
(c) le fait de remplir le récipient intérieur avec un matériau fluide, et de fermer hermétiquement les récipients intérieur et extérieur pour empêcher la fuite du matériau fluide stocké dans le récipient intérieur du récipient de type caisse-outre ;
(d) le fait de transporter le récipient de type caisse-outre rempli vers un second lieu éloigné du premier lieu ;
(e) le fait d'ouvrir les récipients intérieur et extérieur et de vider le matériau fluide du récipient intérieur, pour l'utiliser dans ledit second lieu ;
(f) le fait de retirer le récipient intérieur vidé du récipient extérieur ;
(g) le fait de plier le récipient intérieur sur lui-même et de transporter le récipient intérieur plié du second lieu vers le premier lieu, ou vers un troisième lieu ; et
(h) le fait de répéter les étapes (b) à (g) ;

lesdites étapes (b) à (g) pouvant être répétées sans remplacer le récipient intérieur flexible.